# EUROPÄISCHE PATENTANMELDUNG

(11) **EP 4 442 612 A1**
(43) Veröffentlichungstag der Anmeldung: **09.10.2024**
(21) Anmeldenummer: 24168636.9
(22) Anmeldetag: 05.04.2024
(51) Int. Cl.: B65G 1/04, B65G 1/127, B65G 3/00, B65G 65/00, B65G 65/23, B65G 69/04

(54) **VORRICHTUNG ZUM BEVORRATEN VON TEILEN, INSBESONDERE VON KUNSTSTOFFERZEUGNISSEN, INSBESONDERE VON SPRITZGUSSTEILEN UND SYSTEM**

(30) Priorität: 05.04.2023 DE 102023203132
(71) Anmelder: AKG GmbH & Co. KG, 87663 Lengenwang (DE); Bohling, Ulrich, 32257 Bünde (DE)
(72) Erfinder: Kelz, Anton, 87663 Lengenwang (DE); Bohling, Ulrich, 32257 Bünde (DE); Kelz, Gebhard, 87663 Lengenwang (DE); Pretsch, Markus, 87616 Marktoberdorf (DE)
(74) Vertreter: Rau, Schneck & Hübner Patentanwälte Rechtsanwälte PartGmbB

(57) **Zusammenfassung**

Eine Vorrichtung (3, 3.1, 3.2), zum Bevorraten von Teilen (2), insbesondere von Spritzgussteilen, umfasst eine Tragstruktur, eine Teilezuführeinrichtung (8) zum automatisierten Zuführen der Teile (2) in einen Behälter (11), eine Teileabgabeeinrichtung zum automatisierten Abgeben der Teile aus dem Behälter (11), mindestens zwei Behälterträger (17) zum Tragen von jeweils mindestens einem Behälter (11) zum Aufnehmen der Teile (2), eine an der Tragstruktur ausgebildete Führungseinrichtung (14) zum geführten Verlagern der mindestens zwei Behälterträger (17) entlang einer Transportstrecke, eine erste Transporteinrichtung mit einem motorisch angetriebenen Transportmittel zum Verlagern der mindestens zwei Behälterträger (17) entlang eines ersten Transportabschnitts der Transportstrecke in einem festgelegten Transportabstand zueinander, und eine zweite Transporteinrichtung mit einem motorisch angetriebenen Transportmittel zum Verlagern von mindestens einem der Behälterträger (17) entlang eines zweiten, an den ersten Transportabschnitt angrenzenden Transportabschnitts der Transportstrecke und entlang der Transportstrecke relativ zu mindestens einem der Behälterträger (17) in der ersten Transporteinrichtung.

## Beschreibung

Die vorliegende Patentanmeldung nimmt die Priorität der deutschen Patentanmeldung DE 10 2023 203 132.9 in Anspruch, deren Inhalt durch Bezugnahme hierin aufgenommen wird.

Die Erfindung betrifft eine Vorrichtung zum Bevorraten von Teilen, insbesondere von Kunststofferzeugnissen, insbesondere von Spritzgussteilen. Ferner betrifft die Erfindung ein System mit mindestens einer derartigen Vorrichtung.

Aus der DE 41 21 844 A1 ist eine Vorrichtung zum Bevorraten von Teilen bekannt. Mittels einer Transporteinrichtung werden mehrere Behälterträger zum Tragen von jeweils mindestens einem Behälter in einem festgelegten Transportabstand zueinander entlang einer umlaufend geschlossenen Transportstrecke verlagert. Eine derartige Vorrichtung ist bauraumintensiv. Die Möglichkeiten zur Einflussnahme auf die Bevorratungskapazität sind begrenzt. Die Führung der Behälterträger entlang der Transportstrecke ist komplex und entsprechend aufwändig in der Herstellung und Instandhaltung.

Es ist eine Aufgabe der Erfindung, eine verbesserte Vorrichtung zum Bevorraten von Teilen bereitzustellen, welche insbesondere besonders platzsparend realisierbar, flexibel einsetzbar, wirtschaftlich herstellbar und robust im Betrieb ist.

Diese Aufgabe wird durch eine Vorrichtung zum Bevorraten von Teilen mit den Merkmalen des Anspruchs 1 gelöst. Es wurde erkannt, dass eine Vorrichtung zum Bevorraten von Teilen zusätzlich zu einer ersten Transporteinrichtung zum Verlagern von mindestens zwei Behälterträgern eine zweite Transporteinrichtung zum Verlagern von mindestens einem Behälterträger relativ zu mindestens einem der Behälterträger in der ersten Transporteinrichtung aufweisen kann, um die Einsatzflexibilität der Vorrichtung zu erhöhen. Hierdurch wird insbesondere eine besonders platzsparende Realisierung der Vorrichtung ermöglicht und deren Komplexität reduziert. Eine derartige Vorrichtung ist besonders wirtschaftlich herstellbar und robust im Betrieb. Die erste Transporteinrichtung kann zum Verlagern der mindestens zwei Behälterträger entlang eines ersten Transportabschnitts der Transportstrecke und vorzugsweise in einem festgelegten Transportabstand längs der Transportstrecke zueinander ausgebildet sein. Das Verlagern der mindestens zwei Behälterträger entlang der Transportstrecke mit dem festgelegten Transportabstand reduziert die Komplexität der Transporteinrichtung und erhöht die Zuverlässigkeit der Vorrichtung im Betrieb. Dadurch, dass die zweite Transporteinrichtung zum Verlagern des mindestens einen Behälterträgers relativ zu mindestens einem anderen der Behälterträger ausgebildet ist, kann eine hohe Transportflexibilität trotz der Koppelung der Behälterträger in dem festgelegten Transportabstand erreicht werden. Die Ausbildung der Vorrichtung mit weiteren Transporteinrichtungen reduziert die Komplexität der Führungseinrichtung und der jeweiligen Transporteinrichtung, insbesondere von Führungsmitteln und/oder Antrieben. Die Vorrichtung vereint die Vorteile einer hohen Bevorratungsdichte und Einsatzflexibilität mit verbesserter Robustheit und gesteigerter Wirtschaftlichkeit.

Die Teile können Einzelteile eines damit zusammengesetzten Produkts und/oder Enderzeugnisse sein. Bei den Teilen handelt es sich vorzugsweise um Kleinteile mit einer Hauptabmessung von maximal 500 mm, insbesondere maximal 200 mm, insbesondere maximal 100 mm, insbesondere 50 mm, insbesondere maximal 25 mm, insbesondere maximal 10 mm, insbesondere maximal 5 mm. Insbesondere kann es sich bei den Teilen um Schüttgut handeln. In einem Behälterträger, insbesondere in einem daran angeordneten Behälter, ist vorzugsweise eine Anzahl an Teilen aufnehmbar, die in einem Bereich von 10 bis 100.000, insbesondere von 100 bis 10.000, insbesondere 200 bis 5.000, insbesondere 500 bis 2.000 liegt. Vorzugsweise umfassen die Teile ein Kunststoffmaterial, insbesondere bestehen diese überwiegend aus Kunststoff, insbesondere vollständig.

Eine an einer Tragstruktur ausgebildete Führungseinrichtung kann zum geführten Verlagern der mindestens zwei Behälterträger entlang einer Transportstrecke ausgebildet sein. Die Führungseinrichtung ist insbesondere dazu ausgebildet, die Transportstrecke festzulegen. Vorzugsweise ist die Führungseinrichtung dazu ausgebildet, eine translatorische Bewegung der Behälterträger, insbesondere eine Linearbewegung, insbesondere relativ zu der Tragstruktur, in Richtung der Transportstrecke freizugeben, insbesondere in alle anderen Raumrichtungen zu sperren. Besonders bevorzugt sperrt die Führungseinrichtung mindestens einen, insbesondere mindestens zwei, insbesondere sämtliche rotatorischen Freiheitsgrade, insbesondere in Bezug auf drei aufeinander senkrecht stehende Raumachsen.

Über die Tragstruktur kann das Gewicht der Führungseinrichtung und/oder sämtlicher daran angeordneter Behälterträger und/oder Behälter zu einem überwiegenden Teil, insbesondere vollständig, aufgenommen werden, insbesondere auf den Boden übertragen werden.

Unter dem Transportabstand wird der Abstand zwischen den aufeinander folgenden Behälterträgern in Richtung der Transportstrecke verstanden. Der Transportabstand ist ungleich 0.

Unter dem Verlagern des mindestens einen Behälterträgers entlang der Transportstrecke relativ zu einem anderen Behälterträger wird vorzugsweise verstanden, dass sich der Transportabstand zwischen diesen Behälterträgern in Richtung der Transportstrecke ändert.

Ein Verhältnis zwischen der Maximalabmessung eines Behälters, insbesondere eines Aufnahmeraums für den Behälter, der einen kollisionsfreien Transport des Behälters über die gesamte Transportstrecke noch ermöglicht, in Richtung der Transportstrecke und dem Transportabstand beträgt vorzugsweise maximal 2:1, insbesondere 1,5:1, insbesondere maximal 1,2:1, insbesondere maximal 1,1:1. Die maximale Behälterabmessung entlang der Transportstrecke bzw. die Abmessung des Aufnahmeraums für Behälter entlang der Transportstrecke liegt vorzugsweise in einem Bereich von 0,1 m bis 2 m, insbesondere von 0,2 m bis 1 m, insbesondere von 0,3 m bis 0,6 m.

Gemäß einem Aspekt der Erfindung sind die mindestens zwei Behälterträger der ersten Transporteinrichtung translatorisch starr miteinander verbunden. Die mindestens zwei Behälterträger können, insbesondere mittels der Führungseinrichtung, rotarisch starr miteinander verbunden sein.

Die Anzahl der Behälterträger, die in der Vorrichtung zeitgleich anordenbar sind, liegt vorzugsweise in einem Bereich von 2 bis 100, insbesondere von 5 bis 60, insbesondere von 7 bis 40, insbesondere von 10 bis 15.

Die Anzahl der mittels der ersten Transporteinrichtung zeitgleich verlagerbaren Behälterträger liegt vorzugsweise in einem Bereich von 2 bis 40, insbesondere von 3 bis 20, insbesondere von 4 bis 10. Vorzugsweise sind sämtliche der in der ersten Transporteinrichtung, insbesondere in jeder einzelnen Transporteinrichtung, angeordneten Behälterträger entlang der Transportstrecke in einem festgelegten Transportabstand zueinander angeordnet, insbesondere in demselben Transportabstand zueinander.

Mittels der zweiten Transporteinrichtung kann ein einziger Behälterträger verlagerbar sein. Alternativ kann die Anzahl der mittels der zweiten Transporteinrichtung verlagerbaren Behälterträger in einem Bereich von 2 bis 10, insbesondere von 3 bis 6, liegen.

Die Behälterträger, insbesondere sämtliche der Behälterträger, können ein Behälterkontaktmittel zum Tragen des jeweils mindestens einen Behälters und/oder ein Führungsmittel zum Koppeln an die Führungseinrichtung, insbesondere zum Koppeln an ein Gegen-Führungsmittel der Führungseinrichtung, aufweisen. Das Behälterkontaktmittel mindestens eines, insbesondere sämtlicher, Behälterträger, kann eine Flächenstruktur, insbesondere eine Tragplatte und/oder eine Tragschale, die insbesondere zum direkten Aufnehmen der Teile geeignet ist, aufweisen und/oder mindestens einen Behältergreifer, der zum Greifen der Behälter, insbesondere aber nicht zum Aufnehmen von Teilen, ausgebildet ist.

Das Behälterkontaktmittel kann zum Aufnehmen von mindestens einem, insbesondere mindestens zwei, insbesondere vier, der Behälter ausgebildet sein.

Gemäß einem Aspekt der Erfindung sind der Behälterträger und/oder der Transportabstand derart ausgebildet, dass Behälter mit einer Normabmessung, insbesondere Eurobehälter, passend aufgenommen werden können. Unter einer passenden Aufnahme wird verstanden, dass das Übermaß des zur Verfügung stehenden Aufnahmeraums in Bezug auf die Abmessungen des Behälters, insbesondere in mindestens zwei zueinander senkrechte Raumrichtungen, insbesondere in jede Raumrichtung, maximal 20%, insbesondere maximal 10%, insbesondere maximal 5%, insbesondere 2%, beträgt.

Vorzugsweise weisen die erste und/oder die zweite Transporteinrichtung, insbesondere sämtliche Transporteinrichtungen, einen Antriebsmotor zum automatisierten Verlagern der Behälterträger auf.

Die Vorrichtung kann eine Steuereinrichtung, insbesondere mit einer elektronischen Rechnereinheit, insbesondere einem Prozessor, zum Steuern der Antriebsmotoren aufweisen, insbesondere zum aufeinander abgestimmten Verlagern der Behälterträger zwischen der ersten und der zweiten Transporteinrichtung, insbesondere entlang der gesamten Transportstrecke.

Gemäß einem Aspekt der Erfindung ist mindestens eine der Transporteinrichtungen, insbesondere die zweite Transporteinrichtung motorlos ausgebildet, insbesondere zum Fördern des mindestens einen Behälterträgers mittels Schwerkraft und/oder Massenträgheit.

Gemäß einem weiteren Aspekt der Erfindung sind die Führungseinrichtung und/oder die mindestens eine Transporteinrichtung dazu ausgebildet, den mindestens einen Behälter, insbesondere eine Stellfläche des Behälterkontaktmittels, in einem Bodenabstand des Behälters zu einem Boden, auf dem die Tragstruktur angeordnet ist, von maximal 0,5 m, insbesondere maximal 0,3 m, insbesondere maximal 0,2 m, insbesondere maximal 0,1 m, anzuordnen. Hierdurch wird die Notwendigkeit eines Anhebens der Teile zum Zuführen in die Vorrichtung vermieden.

Gemäß einem weiteren Aspekt der Erfindung ist die Führungseinrichtung dazu ausgebildet, die Behälter, insbesondere mittels der Behälterträger, insbesondere das jeweilige Behälterkontaktmittel, insbesondere eine Stellfläche des Behälterkontaktmittels, horizontal auszurichten. Ein Behälter ist horizontal ausgerichtet, wenn dessen Behälteröffnung und/oder dessen Behälterboden horizontal ausgerichtet sind. Dies wird insbesondere im Großteil der Transportstrecke, insbesondere über mindestens 90%, insbesondere über mindestens 95%, insbesondere über die gesamte Transportstrecke, durch die Fördereinrichtung und/oder durch die Transporteinrichtung gewährleistet.

Gemäß einem weiteren Aspekt der Erfindung sind die mindestens zwei Behälterträger über die Grenzen der einzelnen Transportabschnitte hinweg, insbesondere entlang der gesamten Transportstrecke, verlagerbar. Alternativ können die Behälterträger ausschließlich innerhalb der Grenzen eines jeweiligen Transportabschnitts verlagerbar sein. An den Grenzen der Transportabschnitte können die Behälter zwischen den Behälterträgern aneinander angrenzender Transportabschnitt übergeben werden.

Die Vorrichtung kann eine, insbesondere innerhalb eines Gehäuses der Vorrichtung angeordnete, Konditioniereinrichtung zum Einstellen einer Temperatur und/oder einer Feuchtigkeit und/oder eines Drucks im Bereich der Behälter, insbesondere der Teile, aufweisen. Die Konditioniereinrichtung kann dazu ausgebildet sein die Behälter, insbesondere die Teile, mit einer bestimmten Fluidzusammensetzung, insbesondere mit einem bestimmten Prozessgas, zu beaufschlagen. Die Konditioniereinrichtung kann mindestens zwei Behandlungseinheiten aufweisen, zum Ausbilden mehrerer Behandlungszonen, mit unterschiedlichen der vorstehend beschriebenen Konditionierbedingungen. Vorzugsweise ist die Konditioniereinrichtung zum Steuern eines zeitlichen Verlaufs mindestens einer der Konditionierbedingungen, insbesondere der Temperatur, ausgebildet.

Die Vorrichtung kann ein Mittel zur Teilekonditionierung im Bereich von Kunststoffen und/oder zur Trowalisierung der Teile, insbesondere von Stanzteilen, und/oder zur optischen Prüfung der Teile, insbesondere von optischen Produktmerkmalen, und/oder zur Ionisierung und/oder zur Einflussnahme auf eine elektrische Ladung, insbesondere eine statische Aufladung, insbesondere zum Ableiten von elektrische Ladung von den Teilen und/oder zum Zuleiten elektrische Ladung zu den Teilen, insbesondere den Kunststoffteilen, aufweisen.

Die Vorrichtung kann eine Verteileinrichtung zum Einwirken auf eine Anordnung der Teile in den Behältern aufweisen, insbesondere zum Vergleichmäßigen der Anordnung der Teile, insbesondere von Kleinteilen, in den Behältern. Die Verteileinrichtung kann dazu ausgebildet sein, auf die bereits in den Behältern angeordneten Teile zu wirken und/oder das Einfüllen der Teile in den Behälter zu steuern, insbesondere die Einfüllposition. Die Verteileinrichtung kann eine Vibrationseinheit zum Beaufschlagen des mindestens einen Behälter mit einer Vibrationsbewegung aufweisen. Vorzugsweise ist die Verteileinrichtung reversibel mit dem mindestens einen Behälter koppelbar, insbesondere an diesen und/oder den Behälter zustellbar, oder an dem Behälterträger angebracht.

Die Vorrichtung kann eine Füllstandsüberwachung zum Erfassen des Füllstands mindestens eines, insbesondere sämtlicher, Behälter mit Teilen aufweisen. Beispielsweise umfasst die Füllstandsüberwachung einen Gewichtssensor, insbesondere zum Erfassen eines über die Tragstruktur und/oder auf den jeweiligen Behälterträger übertragenen Gewichts, und/oder einen in den Behälter ausgerichteten Abstandssensor, insbesondere einen Ultraschallsensor.

Gemäß einem Aspekt der Erfindung kann die Vorrichtung eine Behälterwechseleinrichtung zum automatisierten Zuführen mindestens eines Behälters in die Vorrichtung und/oder zum automatisierten Abgeben mindestens eines Behälters aus der Vorrichtung aufweisen. Eine Behälterwechseleinrichtung zum automatisierten Zuführen von Behältern in die Vorrichtung wird auch als Behälterzuführeinrichtung bezeichnet. Eine Behälterwechseleinrichtung zum automatisierten Abgeben des Behälters wird auch als Behälterabgabeeinrichtung bezeichnet. Die Behälterwechseleinrichtung kann eine der beiden Funktionen oder beide Funktionen aufweisen.

Die Behälterwechseleinrichtung, insbesondere die Behälterzuführeinrichtung und/oder die Behälterabgabeeinrichtung, kann einen Förderantrieb, insbesondere einen Linearantrieb, zum automatisierten Verlagern der Behälter, insbesondere in die bzw. aus der Vorrichtung, aufweisen. Die Behälterwechseleinrichtung kann mit einem Linearmechanismus, insbesondere einem Schubladenmechanismus, und/oder einem Schwenkmechanismus zum Verlagern der Behälter ausgebildet sein.

Gemäß einem Aspekt der Erfindung weist die Vorrichtung mindestens eine, insbesondere mindestens zwei, insbesondere mindestens drei, der Behälterwechseleinrichtungen auf. Die mindestens eine Behälterwechseleinrichtung ist vorzugsweise modular an der Vorrichtung, insbesondere an der Tragstruktur, anbringbar, insbesondere reversibel anbringbar, insbesondere je nach gewünschtem, veränderbarem Einsatzzweck der Vorrichtung. Die modulare Bauweise ermöglicht eine besonders wirtschaftliche Herstellung und eine flexible Nutzung der Vorrichtung.

Die mindestens eine Behälterwechseleinrichtung kann starr oder verlagerbar, insbesondere automatisiert verlagerbar, an der Vorrichtung, insbesondere an der Tragstruktur, angebracht sein. Die Vorrichtung kann insbesondere mindestens eine starr angebrachte und/oder mindestens eine verlagerbar angebrachte Behälterwechseleinrichtung aufweisen. Vorzugsweise sind genau zwei verlagerbar angebrachte Behälterwechseleinrichtungen vorgesehen. Die verlagerbar angebrachte Behälterwechseleinrichtung kann in Horizontalrichtung und/oder in Vertikalrichtung, insbesondere ausschließlich in Vertikalrichtung, relativ zu der Tragstruktur, insbesondere automatisiert, verlagerbar sein. Hierdurch kann ein Beladen der Vorrichtung mit einem Behälter und/oder eine Entnahme des Behälters aus der Vorrichtung an unterschiedlichen Positionen, insbesondere in Vertikalrichtung, erfolgen. Vorzugsweise ist die mindestens eine verlagerbare Behälterwechseleinrichtung zwischen mindestens zwei, insbesondere mindestens drei, Behälterträgern verlagerbar, insbesondere wenn die Behälterträger entlang der Transportstrecke nicht bewegt werden. Somit kann auf den jeweiligen Behälter besonders flexibel und zeiteffizient zugegriffen werden. Die Vorrichtung ist damit besonders wirtschaftlich im Betrieb.

Vorzugsweise ist die mindestens eine Behälterwechseleinrichtung dazu ausgebildet, den mindestens einen Behälter aus der Transportstrecke zu entnehmen bzw. in die Transportstrecke zuzuführen während der Behälter mittels der mindestens einen Transporteinrichtung entlang der Transportstrecke verlagert wird. Hierzu kann die mindestens eine Behälterwechseleinrichtung synchron zu dem zugehörigen Behälterträger verlagert werden. Die Vorrichtung ist damit besonders Zeiteffizient im Betrieb.

Das Gehäuse der Vorrichtung kann dazu ausgebildet sein, die Behälter in unterschiedlichen Vertikalpositionen in die Vorrichtung zuzuführen bzw. aus dieser zu entnehmen. Hierzu kann die Vorrichtung mehrere, insbesondere mindestens zwei, insbesondere mindestens vier, insbesondere mindestens sechs, Wechselpositionen und/oder einen Wechselbereich zum Auswechseln von Behältern über einem gewissen Bereich der Transportstrecke, insbesondere in Vertikalrichtung, aufweisen. Der Wechselbereich erstreckt sich entlang der Transportstrecke vorzugsweise über den Abstand von mindestens 2, insbesondere mindestens 3, und/oder maximal 8, insbesondere maximal 4, benachbarten Behälterträgern.

Die Vorrichtung kann ein Führungsmittel, insbesondere ein Vertikalführungsmittel, zum Führen der beweglich gelagerten Behälterwechseleinrichtung aufweisen.

Gemäß einem weiteren, insbesondere eigenständigen, Aspekt der Erfindung kann die Vorrichtung eine Teilezuführeinrichtung zum automatisierten Zuführen der Teile in einen Behälter aufweisen. Die Teilezuführeinrichtung kann eine Vereinzelungseinheit, insbesondere ein Dosiermittel, zum Vereinzeln der Teile, insbesondere zum Dosieren der Teile, aufweisen. Die Teilezuführeinrichtung kann ein Leitelement zum Leiten der Teile, insbesondere ein wannenförmiges Leitelement, insbesondere einen Teilepuffer, aufweisen. Vorzugsweise weist die Teilezuführeinrichtung einen Stellmechanismus zum Verlagern des Leitelements, insbesondere relativ zu der Tragstruktur, auf. Der Stellmechanismus kann zum translatorischen und/oder rotatorischen Verlagern des Leitelements, insbesondere in Horizontalrichtung und/oder in Vertikalrichtung, und/oder um eine Horizontalachse ausgebildet sein.

Die Teilezuführeinrichtung kann ein Dosiermittel mit einer Dosierwaage und/oder einer Dosierscheibe aufweisen. Die Dosierscheibe kann mittels eines Dosiermotors drehangetrieben sein. Vorzugsweise ist an der Dosierscheibe eine Dosierblende angeordnet, welche eine Dosieröffnung der Dosierscheibe zumindest abschnittsweise, insbesondere in Umfangsrichtung abschnittsweise, überlappt.

Die Vorrichtung kann eine Teileabgabevorrichtung aufweisen, insbesondere mit einer Vereinzelungseinheit, insbesondere einer Dosiereinheit. Die Teileabgabeeinrichtung kann vorzugsweise mit mindestens einem der Merkmale weitergebildet sein, die vorstehend in Zusammenhang mit der Teilezuführeinrichtung beschrieben sind.

Die Teileabgabeeinrichtung und/oder die Teilezuführeinrichtung können dazu ausgebildet sein, eine definierte Anzahl von Teilen zuzuführen bzw. abzugeben, insbesondere einzelne Teile zuzuführen bzw. abzugeben, insbesondere wenn es sich bei den Teilen um Kleinteile, insbesondere um Schüttgut, handelt.

Die Teileabgabeeinrichtung kann einen Kippmechanismus zum Kippen des mindestens einen Behälters und/oder Behälterträgers, insbesondere aus einer Horizontalanordnung, aufweisen. Der Kippmechanismus ist vorzugsweise dazu ausgebildet, den Behälter und/oder Behälterträger um mindestens 90°, insbesondere mindestens 110°, zu kippen. Das Kippen ermöglicht vorzugsweise ein schwerkraftbedingtes Entleeren der in dem Behälter angeordneten Teile. Vorzugsweise weist die Teileabgabeeinrichtung einen Deckel auf, der den Behälter zumindest abschnittsweise, insbesondere vollständig, überlappt bzw. verschließt. Der Deckel kann eine Abgabeöffnung aufweisen. Der Deckel ist vorzugsweise, insbesondere automatisiert, reversibel auf dem Behälter anordenbar. Somit können die Teile aus dem Behälter, insbesondere beim Kippen des Behälters, gezielt abgegeben werden.

Die Vorrichtung kann zum, insbesondere automatisierten, insbesondere autonomen, Transport ausgebildet sein. Hierzu kann die Vorrichtung eine Fahrwagenkopplung zum reversiblen Verbinden mit einem Fahrwagen und/oder eine integrierte Fahreinheit zum selbstständigen Verlagern der Vorrichtung, insbesondere in Horizontalrichtung, aufweisen. Der Fahrwagen und/oder die Fahreinheit können zum automatisierten Verlagern einen Fahrmotor aufweisen. Zur zentralen Steuerung können sie ein Funkmodul aufweisen. Vorzugsweise sind der Fahrwagen und/oder die Fahreinheit, insbesondere mittels einer zentralen Steuerung, fernsteuerbar.

Die Vorrichtung kann eine Abstützeinheit zum Entlasten des Fahrwagens und/oder der Fahreinheit aufweisen. Die Abstützeinheit stützt vorzugsweise die Tragstruktur gegenüber dem Boden ab. Die Abstützeinheit kann einen Abstützaktor zum automatisierten, reversiblen Abstützen gegenüber dem Boden aufweisen. Die Vorrichtung ist somit besonders robust und zuverlässig am Boden festlegbar, insbesondere, wenn diese mittels des Fahrwagens und/oder der Fahreinheit transportiert wird.

Vorzugweise weist die Vorrichtung vier Transporteinrichtungen auf, welche jeweils paarweise zum horizontalen und vertikalen Verlagern der Behälterträger vorgesehen sind, insbesondere in einer rechteckförmigen, umlaufenden Transportstrecke.

Die Teile können Kunststoffteile, insbesondere Spritzgussteile und/oder Metallteile, insbesondere Stanzteile, und/oder Werkzeuge, insbesondere

Werkzeugteile, insbesondere Stanzwerkzeuge und/oder Werkzeuge zur spanenden Bearbeitung von Werkstücken und/oder Tiefziehwerkzeuge, umfassen.

Die Behälter können wannenförmig, insbesondere zum Aufnehmen von Kleinteilen, insbesondere in einer ungeordneten Schüttung, sein. Alternativ können die Behälter zum Aufnehmen von Werkzeugen, insbesondere in definierter Anordnung in dem Behälter, ausgebildet sein. Die Behälter können lose auf den Behälterträgern abgestellt sein und/oder fest mit den Behälterträgern verbunden, insbesondere verschraubt, sein.

Vorzugsweise hat jeder Behälter Kontakt mit jeweils einem Behälterträger. Ein Stapeln mehrerer Behälter aufeinander reduziert die Zugänglichkeit und soll vermieden werden. Jedem Behälter ist somit vorzugsweise genau ein Behälterträger zugeordnet. Jeder Behälterträger kann allerdings einen einzigen oder mehrere der Behälter tragen.

Gemäß einem weiteren Aspekt der Erfindung ist die zweite Transporteinrichtung zum Verlagern der mindestens zwei Behälterträger, insbesondere in einem festgelegten Transportabstand entlang der Transportstrecke, ausgebildet. Hierdurch ist die Vorrichtung besonders flexibel und effizient im Betrieb.

Gemäß einem weiteren Aspekt der Erfindung erstreckt sich die Transportstrecke überwiegend, insbesondere über mindestens 90%, insbesondere über mindestens 95%, ihrer Gesamterstreckung in einer Transportebene. Mit anderen Worten liegt der Bewegungspfad der Behälterträger und/oder der Behälter in einer Ebene, insbesondere in der Transportebene. Hierdurch kann die Komplexität der Vorrichtung, insbesondere der Führungseinrichtung und/oder der Transporteinrichtungen reduziert werden.

Gemäß einem Aspekt der Erfindung ist die Transportstrecke im Bereich des ersten und/oder des zweiten Transportabschnitts, insbesondere jedes Transabschnitts, jeweils geradlinig ausgebildet. Alternativ kann die Transportstrecke in mindestens einem Transportabschnitt gekrümmt, insbesondere bogenförmig, ausgebildet sein. Die geradlinige Führung ist besonders wirtschaftlich realisierbar, robust im Betrieb und gewährleistet eine hohe Bevorratungskapazität. In den Bereichen, in welchen unterschiedliche Transportabschnitte aneinander angrenzen, kann die Transportstrecke einen Knick aufweisen, insbesondere von 90° oder knickfrei ausgebildet sein.

Gemäß einem weiteren Aspekt der Erfindung weist der jeweilige Behälterträger ein Führungsmittel auf, das an einem Gegen-Führungsmittel der Führungseinrichtung gelagert ist. Das Führungsmittel und das Gegen-Führungsmittel können ein Linearlager ausbilden. Vorzugsweise sind das Führungsmittel als Führungsschlitten und das Gegen-Führungsmittel als Führungsschiene ausgebildet. Zwischen dem Führungsmittel und dem Gegen-Führungsmittel kann ein Gleitlager und/oder ein Rollenlager ausgebildet sein. Zum Ausbilden des Gleitlagers können das Führungsmittel und/oder das Gegen-Führungsmittel einen Gleitlagerwerkstoff, insbesondere eine Bronzelegierung und/oder einen Kunststoff, insbesondere PTFE, aufweisen. Vorzugsweise sind das Führungsmittel und das Gegen-Führungsmittel derart ausgebildet, dass zwischen diesen mindestens zwei, insbesondere genau zwei oder sämtliche rotatorische Freiheitsgrade, gesperrt sind.

Gemäß einem weiteren Aspekt der Erfindung weist der jeweilige Behälterträger ein, insbesondere unabhängig von dem Führungsmittel und/oder dem Gegen-Führungsmittel, wirkendes Ausrichtmittel zum Festlegen einer Orientierung des Behälterträgers auf, insbesondere unabhängig von und/oder zusätzlich zu einer Festlegung der Orientierung durch das Führungsmittel und/oder das Gegen-Führungsmittel. Zum Festlegen der Orientierung des Behälterträgers kann die mindestens eine Transporteinrichtung, insbesondere die zweite Transporteinrichtung, insbesondere jede Transporteinrichtung, ein Gegen-Ausrichtmittel zum Festlegen der Orientierung des Behälterträgers, insbesondere um eine Horizontalachse, die insbesondere senkrecht zu der Transportebene orientiert ist, aufweisen. Das Ausrichtmittel gewährleistet vorteilhaft, dass der mindestens eine Behälterträger an jeder Position entlang der Transportstrecke zuverlässig in der gewünschten Orientierung ausrichtet ist.

Gemäß einem weiteren Aspekt der Erfindung weist das jeweilige Ausrichtmittel mindestens einen Eingriffsabschnitt auf, mittels welchem jeweils die Orientierung des Behälterträgers festlegbar ist. In dem Eingriffsabschnitt kann das Ausrichtmittel mit dem Gegen-Ausrichtmittel zum Festlegen der Orientierung gekoppelt werden. Die Kopplung ist vorzugsweise reversibel lösbar. Hierzu können das Ausrichtmittel und/oder das Gegen-Ausrichtmittel beispielsweise gabelförmig und/oder in der Form des Buchstabens U ausgebildet sein.

Das Ausrichtmittel kann mindestens zwei Eingriffsabschnitte aufweisen. Die mindestens zwei Eingriffsabschnitte sind vorzugsweise zueinander versetzt angeordnet, insbesondere in Richtung senkrecht zu der Transportebene, und/oder zum zeitgleichen Koppeln mit zwei Gegen-Ausrichtmitteln zweier Transporteinrichtungen ausgebildet.

Gemäß einem weiteren Aspekt der Erfindung weisen die erste und/oder die zweite, insbesondere sämtliche, Transporteinrichtungen ein, insbesondere motorisch angetriebenes, Transportmittel auf. Vorzugsweise ist der jeweilige Transportabschnitt dadurch gekennzeichnet, dass sich das Transportmittel der zugehörigen Transporteinrichtung nicht über dessen Enden hinaus erstreckt. Vorzugsweise ist das mindestens eine Transportmittel einer, insbesondere jeder, Transporteinrichtung relativ zu, insbesondere unabhängig von, dem Transportmittel anderer Transporteinrichtungen antreibbar. Zum Zusammenwirken mit jeweils einem der Behälterträger kann an dem jeweiligen Transportmittel mindestens ein Mitnehmer angebracht sein. Die Anzahl der Mitnehmer entspricht vorzugsweise mindestens der Anzahl der zeitgleich in der Transporteinrichtung aufnehmbaren Behälterträger. Vorzugsweise ist die Anzahl der Mitnehmer mindestens 50%, insbesondere mindestens 100% größer als die Anzahl der in der jeweiligen Transporteinrichtung aufnehmbaren Behälterträger. Vorzugsweise ist das Transportmittel endlos umlaufend ausgebildet. Das Transportmittel kann eine Transportkette und/oder einen Transportriemen umfassen. Der Antrieb kann elektromotorisch und/oder fluidisch, insbesondere pneumatisch, ausgebildet sein. Der Mitnehmer kann in der Form eines Zapfens und/oder kragarmförmig und/oder gabelförmig und/oder U-Förmig ausgebildet sein. Der Mitnehmer ist an dem Transportmittel vorzugsweise starr und/oder reversibel lösbar, insbesondere formschlüssig, insbesondere mittels einer Stiftverbindung, und/oder kraftschlüssig, insbesondere mittels einer Klemmverbindung, angebracht.

Gemäß einem weiteren Aspekt der Erfindung ist der mindestens eine Mitnehmer, insbesondere sind sämtliche Mitnehmer, zum reversiblen Koppeln mit jeweils einem der Behälterträger ausgebildet. Vorzugsweise ist die Vorrichtung dazu ausgebildet, den jeweiligen Behälterträger innerhalb eines Transportabschnitts mit demselben Mitnehmer zu transportieren und beim Wechseln zu einem unteren Transportabschnitt an einen Mitnehmer der Transporteinrichtung des anderen Transportabschnitts zu übergeben.

Gemäß einem weiteren Aspekt der Erfindung weist mindestens einer der Mitnehmer ein Gegen-Ausrichtmittel zum Festlegen einer Orientierung des damit zusammenwirkenden Behälterträgers, insbesondere um eine Horizontalachse, insbesondere um eine Senkrechte zu der Transportebene, auf. Das Gegen-Ausrichtmittel kann separat von der Führungseinrichtung, insbesondere dem Gegen-Führungsmittel ausgebildet sein. Hierdurch wird eine besonders zuverlässige Ausrichtung der Behälterträger in der gewünschten Orientierung erreicht. Zudem kann die Orientierung des Behälterträgers und/oder des Behälters, beispielsweise zum Aufnehmen und/oder Aufnehmen und/oder Entleeren der Teile in einem bestimmten Bereich der Transportstrecke, flexibel geändert werden.

Das Ausrichtmittel kann dem Führungsmittel entsprechen, insbesondere als Führungsschlitten ausgebildet sein, und/oder dem Gegen-Führungsmittel entsprechen, insbesondere als Führungsschiene ausgebildet sein. Eine entsprechende Ausbildung des Ausrichtmittels kann in dem mindestens einen und/oder in jedem der Eingriffsabschnitte vorliegen. Das Gegen-Ausrichtmittel kann dem Ausrichtmittel entsprechend, insbesondere wie das Gegen-Führungsmittel und/oder das Führungsmittel, ausgebildet sein.

Gemäß einem weiteren Aspekt der Erfindung weist die Vorrichtung mindestens ein, insbesondere mindestens zwei, insbesondere mindestens drei, weitere Transporteinrichtungen zum Verlagern mindestens eines, insbesondere mindestens zweier, Behälterträger entlang eines weiteren, insbesondere an den ersten und/oder den zweiten Transportabschnitt angrenzenden, Transportabschnitts der Transportstrecke auf. Zwischen je zwei benachbarten Transporteinrichtungen weist die Transportstrecke vorzugsweise einen Knick, insbesondere von 90°, auf. Vorzugsweise sind die unterschiedlichen Transporteinrichtungen dadurch gekennzeichnet, dass die in den unterschiedlichen Transporteinrichtungen angeordneten Behälterträger entlang der Transportstrecke relativ zueinander verlagerbar sind. Die Anzahl der Transporteinrichtungen liegt vorzugsweise in einem Bereich von 2 bis 20, insbesondere 3 bis 15, insbesondere 4 bis 10, insbesondere 5 bis 8. Vorzugsweise sind mindestens zwei der Transporteinrichtungen gemäß der vorstehend beschriebenen ersten Transporteinrichtung und/oder mindestens zwei der Transporteinrichtungen gemäß der vorstehend beschriebenen zweiten Transporteinrichtung ausgebildet.

Gemäß einem weiteren Aspekt der Erfindung verläuft die Transportstrecke in mindestens zwei Transportabschnitten, insbesondere in allem Transportabschnitten, insbesondere ausschließlich, horizontal und/oder vertikal, insbesondere geradlinig. Hierdurch ist die Vorrichtung besonders robust realisierbar und weist eine hohe Bevorratungskapazität auf.

Gemäß einem weiteren Aspekt der Erfindung weist die von der Führungseinrichtung gebildete Transportstrecke mindestens eine Transportstreckenkreuzung auf. An einer Transportstreckenkreuzung grenzen mindestens zwei Transportabschnitte aneinander an. Insbesondere können an eine Transportstreckenkreuzung mindestens drei, insbesondere mindestens vier, insbesondere mindestens fünf, insbesondere mindesten sechs, Transportabschnitte und/oder Transporteinrichtungen angrenzen. Beispielsweise kann die Transportstreckenkreuzung T-förmig oder X-förmig ausgebildet sein.

An einer T-förmigen Transportstreckenkreuzung können beispielsweise zwei oder drei Transportabschnitte vorliegen. Vorzugsweise weist die Vorrichtung mindestens zwei, insbesondere mindestens vier, insbesondere mindestens sechs, Transportstreckenkreuzungen auf. Hierdurch sind die Einsatzflexibilität und die Bevorratungskapazität der Vorrichtung erhöht.

Gemäß einem weiteren Aspekt der Erfindung ist die von der Führungseinrichtung gebildete Transportstrecke zum Anordnen der Behälterträger in einer Rasterform ausgebildet. Die Rasterform kann durch mehrere horizontale und mehrere vertikale Transportabschnitte ausgebildet sein, beispielsweise mindestens 2, insbesondere mindestens 3, insbesondere mindestens 4, insbesondere mindestens 6, insbesondere mindestens 10, vertikale und/oder horizontale Transportabschnitte. Strukturell besonders vorteilhaft ist eine Ausbildung von zwei horizontalen Transportabschnitten und mehr als 2, insbesondere mindestens 3, insbesondere mindestens 6, insbesondere mindestens 10 vertikalen Transportabschnitten.

Die Rasterform ist vorzugsweise rechteckförmig. Die Anzahl der Behälterträger in Horizontalrichtung und/oder in Vertikalrichtung kann der Anzahl der Transportabschnitte in der jeweiligen Richtung entsprechen oder größer sein. Beispielsweise kann in Horizontalrichtung die Anzahl der vertikal orientierten Transportabschnitte entsprechen. In Vertikalrichtung kann die Anzahl der Behälterträger deutlich größer sein als die Anzahl der horizontal orientierten Transportabschnitte. Beispielsweise kann eine Rasteranordnung mit (2 bis 10) x (2 bis 20) Stellpositionen (Stellpositionen in Horizontalrichtung x Stellpositionen in Vertikalrichtung), insbesondere mit 2 x 4 Stellpositionen, vorliegen. Von den hierdurch bestimmten Stellpositionen für die Behälterträger können einzelne Stellpositionen, zumindest temporär, unbesetzt bleiben, insbesondere um die Verlagerungsbewegung in effizienter Weise zu gewährleisten.

Gemäß einem weiteren Aspekt der Erfindung ist der erzielbare Flächennutzungsgrad in der Transportebene mindestens 65%, insbesondere mindestens 70%, insbesondere mindestens 75%, insbesondere mindestens 80%, insbesondere mindestens 85%, insbesondere mindestens 90%, insbesondere mindestens 95%. Der Flächennutzungsgrad kann bestimmt werden als Quotient der Summe der Schnittflächen der Transportebene mit der kleinsten konvexen Einhüllenden aller einzelnen in der Vorrichtung angeordneten Behälter und einer Schnittfläche der Transportebene mit einer kleinsten konvexen Einhüllenden über alle in der Vorrichtung angeordneten Behälter. Bevorzugter werden nicht die Abmessungen der Behälter zugrunde gelegt, sondern die Abmessungen des für die Behälter jeweils maximal zu Verfügung stehenden Aufnahmeraums. Ein derartiger Flächennutzungsgrad führt zu einer besonders hohen Bevorratungskapazität.

Gemäß einem weiteren Aspekt der Erfindung weist die Vorrichtung eine Behälterzuführeinrichtung zum, insbesondere automatisierten, Zuführen von Behältern in die Vorrichtung, insbesondere an die Behälterträger, und/oder eine Behälterabgabeeinrichtung zum, insbesondere automatisierten, Abgeben von Behältern aus der Vorrichtung, insbesondere von den Behälterträgern, auf. Die Behälterzuführeinrichtung und/oder die Behälterabgabeeinrichtung können einen Antrieb, insbesondere einen Linearantrieb, zum Verlagern der Behälter und/oder einen Kippmechanismus zum Schwenken der Behälter und/oder ein verlagerbares Verschlussmittel zum reversiblen Öffnen des Gehäuses, insbesondere eine Tür und/oder einen Schieber, aufweisen und/oder einen Schubladenmechanismus umfassen.

Die Vorrichtung kann eine Teilezuführeinrichtung zum Zuführen der Teile, insbesondere in einen in der Vorrichtung aufgenommenen Behälter, und/oder eine Teileabgabeeinrichtung zum Entnehmen der Teile, insbesondere aus einem in der Vorrichtung angeordneten Behälter, aufweisen. Die Teilezufuhr und/oder die Teileabgabe kann parallel oder schräg, insbesondere senkrecht, zu der Transportebene erfolgen. Die Teileabgabeeinrichtung kann eine Vereinzelungseinheit, insbesondere für Kleinteile, insbesondere einen Vibrationsförderer, umfassen.

Gemäß einem weiteren Aspekt der Erfindung ist die Fördereinrichtung, insbesondere die Transportstrecke, zum Ausbilden eines Förderkreises ausgebildet, insbesondere zum endlos umlaufenden Fördern der Behälterträger. Vorzugsweise erfolgt das Verlagern des mindestens einen Behälterträgers entlang der Förderstrecke relativ zu einem anderen der Behälterträger, insbesondere das Verändern des Transportabstands, und/oder das Fördern mit dem festgelegten Transportabstand innerhalb des Förderkreises. In dem Förderkreis erfolgt vorzugsweise ein rechteckförmiger Behälterumlauf. Hierzu kann die Teilstrecke zumindest eine, insbesondere mehrere, umlaufend geschlossen ausgebildete Teilstrecken aufweisen. Der Förderkreis ist insbesondere derart ausgebildet, dass der mindestens eine Behälterträger aus einer Stellposition entlang der Transportstrecke wieder in dieselbe Stellposition verlagert werden kann, ohne denselben Transportabschnitt mehrfach zu durchlaufen. Die Transportstrecke kann offene Enden, insbesondere in der Art einer Sackgasse, aufweisen. Hierdurch wird die Förderflexibilität nochmals gesteigert. Beispielsweise können an dem Ende eines offenen Transportabschnitts die Behälterzuführeinrichtung und/oder die Behälterabgabeeinrichtung und/oder die Teilezuführeinrichtung und/oder die Teileabgabeeinrichtung angeordnet sein.

Im Allgemeinen weist eine erfindungsgemäße Vorrichtung zum Bevorraten von Teilen, insbesondere von Kunststofferzeugnissen, insbesondere von Spritzgussteilen, eine Tragstruktur, mindestens einen, insbesondere mindestens zwei, Behälterträger zum Tragen von jeweils mindestens einem Behälter zum Aufnehmen der Teile und/oder mindestens einen derartigen Behälter, eine an der Tragstruktur ausgebildete Führungseinrichtung zum geführten Verlagern des mindestens einen Behälterträgers und/oder Behälters entlang einer Transportstrecke, und eine erste Transporteinrichtung zum Verlagern des mindestens einen Behälterträgers und/oder Behälters entlang eines ersten Transportabschnitts der Transportstrecke auf. Die Vorrichtung ist vorzugsweise mit mindestens einem der vorstehend beschriebenen Aspekte und/oder Merkmale weitergebildet.

Es ist eine weitere Aufgabe der Erfindung, ein verbessertes System zu schaffen, welches insbesondere besonders platzsparend, flexibel einsetzbar, wirtschaftlich herstellbar und robust im Betrieb ist.

Diese Aufgabe wird gelöst durch ein System mit mindestens einer Vorrichtung gemäß der vorstehenden Beschreibung und einer fördertechnisch mit der mindestens einen Vorrichtung verbundenen Maschine zum Herstellen der Teile.

Unter dem Herstellen von Teilen werden das Urformen und/oder das Bearbeiten, insbesondere umfassend das Umformen und/oder das Trennen, von Teilen verstanden. Die Maschine kann beispielsweise eine Spritzgussmaschine und/oder eine Strangpressmaschine und/oder eine Stanzmaschine und/oder eine Tiefziehmaschine und/oder eine Montagemaschine, sein. Die Vorteile des Systems entsprechen den Vorteilen der vorstehend beschriebenen Vorrichtung. Das System kann mit mindestens einem der Merkmale weitergebildet sein, die vorstehenden im Zusammenhang mit der Vorrichtung beschrieben sind.

Das System kann im Allgemeinen die mindestens eine Vorrichtung und eine Bearbeitungsstation zum automatisierten Herstellen, insbesondere die mindestens eine Maschine, und/oder zum manuellen Herstellen der Teile umfassen. Die mindestens eine Bearbeitungsstation, insbesondere die mindestens eine Maschine, kann entlang einer Materialflusskette stromaufwärts und/oder stromabwärts der Vorrichtung angeordnet sein. Bei einer Anordnung im Hinblick auf die Bearbeitungsstation stromabwärts des Teilestroms kann die Vorrichtung als Speicher, insbesondere als Pufferspeicher, genutzt werden. Bei einer Anordnung der Vorrichtung stromaufwärts der mindestens einen Bearbeitungsstation kann die Vorrichtung als Bunker zum bedarfsabhängigen Ausgeben der Teile genutzt werden. Gemäß einem Aspekt der Erfindung sind zwei der Vorrichtungen vorgesehen, jeweils eine stromaufwärts der Bearbeitungsstation, insbesondere mit der Funktion eines Bunkers, und eine stromabwärts der Bearbeitungsstation, insbesondere mit der Funktion eines Speichers.

Gemäß einem weiteren Aspekt der Erfindung umfasst das System mindestens zwei der Maschinen zum Herstellen unterschiedlicher Teile, welche insbesondere fördertechnisch mit der mindestens einen Vorrichtung verbunden sind, insbesondere dieselbe Vorrichtung mit Teilen beschicken. Die mindestens zwei Maschinen können unterschiedliche Taktzeiten und/oder unterschiedliche Anlaufzeiten und/oder unterschiedliche Standzeiten, aufweisen. Die Bevorratungskapazität der Vorrichtung kommt hierbei besonders vorteilhaft zum Tragen. Dies gilt insbesondere dann, wenn die beiden Maschinen zum Herstellen von Teilen verwendet werden, die in einem nachfolgenden Montageschritt, insbesondere in einer als Montagestation ausgebildeten Bearbeitungsstation zusammengebaut werden. Vorzugsweise umfasst das System dementsprechend mindestens eine Montagestation und die mindestens zwei Maschinen, die fördertechnisch mit der Bearbeitungsstation verbunden sind und entlang des Teilestroms dazwischen mindestens eine Vorrichtung, insbesondere eine einzige Vorrichtung oder mindestens eine Vorrichtung je Maschine.

Das System ist vorzugsweise zum Durchführen eines mehrschrittigen Herstellungsprozesses ausgebildet, mit mindestens zwei, insbesondere mindestens drei, insbesondere mindestens 5, parallelisierten und/oder aufeinanderfolgenden Herstellungsschritten. Die Herstellungsschritte werden vorzugsweise jeweils an einer Bearbeitungsstation, insbesondere an einer Maschine, durchgeführt. Zwischen mindestens zwei, insbesondere zwischen zwei entlang des Teilestroms benachbarten, insbesondere zwischen sämtlichen, Bearbeitungsstationen kann eine der Vorrichtungen angeordnet sein.

Gemäß einem Aspekt der Erfindung können unterschiedliche Teile an unterschiedlichen Behälterträgern, insbesondere in unterschiedlichen Behältern, bevorratet werden. Die Teile können baulich unterschiedlich sein, unterschiedliche Bearbeitungszustände aufweisen, von unterschiedlichen Maschinen hergestellt sein, unterschiedliche Konditioniereigenschaften aufweisen und/oder einen unterschiedlichen Inspektionsstatus aufweisen, beispielsweise geprüft oder ungeprüft sein.

Gemäß einem weiteren Aspekt der Erfindung weist das System zwei der Vorrichtungen auf, die in derselben Materialflusskette, insbesondere entlang des Teilestroms, in Serie und/oder parallel zueinander geschaltet sind. Hierdurch ist eine besonders effiziente und wirtschaftliche Handhabung der Teile möglich.

Gemäß einem Aspekt der Erfindung sind die Bestandteile des Systems stationär angeordnet, insbesondere auf demselben Gelände, insbesondere in derselben Halle, insbesondere in demselben Raum.

Weitere Merkmale, Vorteile und Einzelheiten der Erfindung ergeben sich aus der nachfolgenden Beschreibung mehrerer Ausführungsbeispiele anhand der Figuren. Es zeigen:
- Fig. 1: eine perspektivische Darstellung eines Systems mit einer Vorrichtung zum Bevorraten von Teilen, insbesondere von Spritzgussteilen, und einer fördertechnisch vorgeschalteten Maschine zum Herstellen der Teile,
- Fig. 2: eine perspektivische Darstellung der Vorrichtung in der Fig. 1, wobei die Vorrichtung weitgehend mit einem Gehäuse verkleidet ist,
- Fig. 3: eine perspektivische Darstellung der Vorrichtung in der Fig. 1, ohne das Gehäuse, wobei die Vorrichtung vier Transporteinrichtungen mit Mitnehmern aufweist, die jeweils zum Antreiben von Behälterträgern entlang einer Transportstrecke und zum Festlegen einer Orientierung der Behälterträger ausgebildet sind,
- Fig. 4: eine perspektivische Detaildarstellung einer Vorrichtung gemäß einer weiteren Ausführungsform, wobei die Vorrichtung fünf Transporteinrichtungen zum Verlagern der Behälterträger aufweist, wobei die Transportstrecke zwei Transportstreckenkreuzungen umfasst und, wobei lediglich die Mitnehmer der horizontal orientierten Transporteinrichtungen zum Festlegen einer Orientierung des daran gekoppelten Behälterträgers ausgebildet sind,
- Fig. 5: eine perspektivische Detaildarstellung eines Eckbereichs der Vorrichtung in der Fig. 4, wobei die Führungseinrichtung Führungsschienen zum linear verschiebbaren Lagern eines Führungsschlittens des jeweiligen Behälterträgers aufweist und, wobei die Linearlagerung als Gleitlager ausgebildet ist,
- Fig. 6: eine perspektivische Detaildarstellung der Transportstreckenkreuzung der Vorrichtung in der Fig. 4,
- Fig. 7: eine Vorderansicht einer Transportstreckenkreuzung einer Vorrichtung gemäß einer weiteren Ausführungsform, wobei zwischen der Führungseinrichtung und den Behälterträgern ein Linearlager in der Form eines Rollenlagers ausgebildet ist,
- Fig. 8: eine Seitenansicht der Transportstreckenkreuzung der Fig. 7,
- Fig. 9: eine perspektivische Darstellung eines Systems gemäß einer weiteren Ausführungsform, wobei zwei Vorrichtungen entlang einer Materialflusskette in Reihe geschaltet sind und, wobei entlang der Materialflusskette zwischen den Vorrichtungen eine Bearbeitungsstation zum Bearbeiten von Teilen angeordnet ist,
- Fig. 10: eine perspektivische Darstellung einer Vorrichtung gemäß einer weiteren Ausführungsform, wobei beidseitig an der Tragstruktur jeweils mindestens eine Behälterwechseleinrichtung vorgesehen ist und, wobei an einer der Behälterwechseleinrichtungen eine Vereinzelungseinheit zum Vereinzeln von Kleinteilen, insbesondere von Schüttgut, vorgesehen ist,
- Fig. 11: eine perspektivische Darstellung der Vereinzelungseinheit in der Fig. 10, wobei diese eine Dosierscheibe, eine Dosierblende und einen Dosiermotor zum Drehantreiben der Dosierscheibe relativ zu der Dosierblende aufweist,
- Fig. 12: eine perspektivische Darstellung eines Systems gemäß einer weiteren Ausführungsform mit der Vorrichtung in der Fig. 10, einer in der Materialflusskette stromabwärts der Vorrichtung angeordneten Maschine zum Bearbeiten der Teile und einer fördertechnischen Verbindung zwischen der Vorrichtung und der Maschine, wobei an einer der Behälterwechseleinrichtungen eine Teileabgabeeinrichtung vorgesehen ist,
- Fig. 13: eine perspektivische Darstellung einer Vorrichtung gemäß einer weiteren Ausführungsform, wobei an einer der Behälterwechseleinrichtungen eine Teilezuführeinrichtung vorgesehen ist,
- Fig. 14: eine perspektivische Darstellung eines Systems gemäß einer weiteren Ausführungsform, mit der Vorrichtung in der Fig. 13, einer Spritzgussmaschine und einer fördertechnischen Verbindung zwischen der Vorrichtung und der Spritzgussmaschine,
- Fig. 15: eine schematische Darstellung eines Systems gemäß einer weiteren Ausführungsform mit zwei Maschinen zum Herstellen der Teile und mehreren der Vorrichtungen, bzw.
- Fig. 16: eine schematische Darstellung eines Systems gemäß einer weiteren Ausführungsform mit einer Maschine zum Herstellen der Teile und zwei der Vorrichtungen.

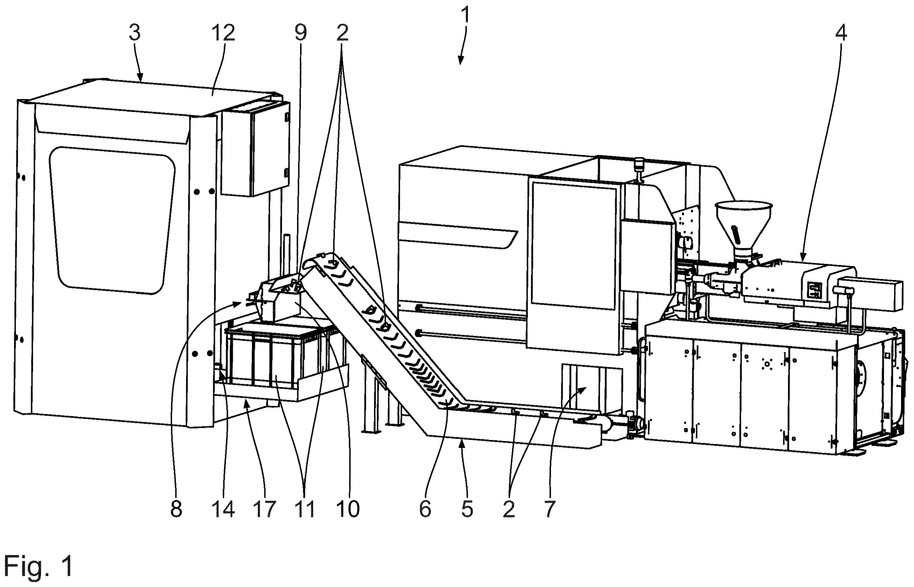

Anhand der Fig. 1 bis 3 ist eine erste Ausführungsform eines Systems 1 zum Herstellen und Bevorraten von Teilen 2, insbesondere von Kunststofferzeugnissen, insbesondere von Spritzgussteilen, beschrieben. Das System 1 weist mindestens eine Vorrichtung 3 zum Bevorraten derartiger Teile 2 auf. Der Vorrichtung 3 fördertechnisch vorausgeschaltet ist eine Maschine 4 zum Herstellen der Teile 2, insbesondere eine Spritzgussmaschine.

Eine Teilefördereinheit 5 verbindet die Maschine 4 mit der Vorrichtung 3. Die Teilefördereinheit 5 umfasst ein Förderband 6, das sich zwischen einer Abgabestelle 7 der Maschine 4 und einer Teilezuführeinrichtung 8 erstreckt. Die Teilezuführeinrichtung 8 ist, insbesondere in einer modularen Bauweise, insbesondere reversibel lösbar, an die Vorrichtung 3 angeschlossen.

Die Teilezuführeinrichtung 8 weist ein Leitelement 9 zum Zuführen der Teile 2 in die Vorrichtung 3 an einer gewünschten Zuführposition auf. Das Leitelement 9 ist vorzugsweise als Zuführbehälter zum Zwischenspeichern von Teilen 2, insbesondere einer Kleinmenge entsprechender Teile 2, ausgebildet.

Die Teilezuführeinrichtung 8 weist einen Stellmechanismus 10 zum Positionieren des Leitelements 9 auf. Der Stellmechanismus 10 ist vorzugsweise motorisch angetrieben. Der Stellmechanismus 10 kann zum Verlagern des Leitelements 9 in einer Vertikalrichtung und/oder in einer Horizontalrichtung und/oder zum Ausrichten des Leitelements 9 um eine Horizontalachse und/oder um eine Vertikalachse, ausgebildet sein.

In der Vorrichtung 3 sind Behälter 11 zum Aufnehmen der Teile 2 angeordnet. Die Teilezuführeinrichtung 8 ist insbesondere dazu ausgebildet, die Teile 2 in die in der Vorrichtung 3 angeordneten Behälter 11 zuzuführen. Die Behälter 11 sind in der Vorrichtung 3 verlagerbar angeordnet. Vorzugsweise ist die Teilezuführeinrichtung 8 dazu ausgebildet, das Leitelement 9 reversibel in einen von den Behältern 11 beim Verlagern überstrichenen Bewegungsraum reversibel einzuführen. Das Leitelement 9 kann mittels des Stellmechanismus 10 in diesen Bewegungsraum zugestellt und zum Vermeiden einer Kollision eines Behälters 11 mit dem Leitelement 9 in einen Bereich außerhalb des Bewegungsraums zurückgestellt werden. Hierdurch können die Teile 2 den Behältern 11 zuverlässig und ohne Verluste zugeführt werden.

Die Vorrichtung 3 umfasst ein Gehäuse 12, insbesondere eine Sicht- und/oder Schutzverkleidung, insbesondere zum Verhindern des Eingreifens in bewegliche Teile der Vorrichtung 3. Die Vorrichtung 3 kann vollständig innerhalb des Gehäuses 12, insbesondere in einer von dem Gehäuse 12 aufgespannten, kleinesten konvexen Einhüllenden, angeordnet sein.

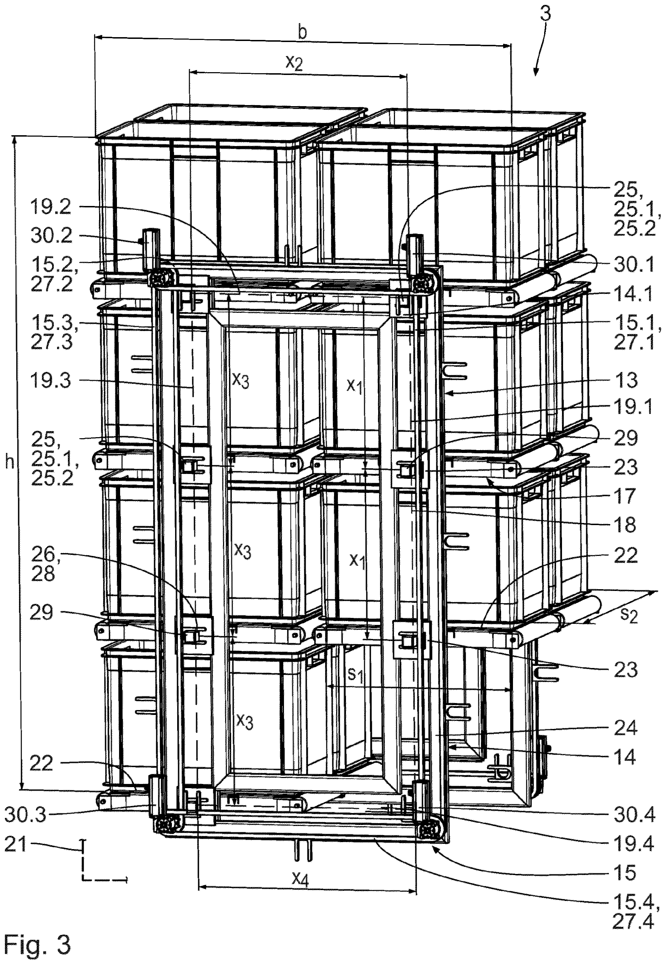

In der Fig. 3 ist die Vorrichtung 3 weiter im Detail dargestellt. Die Vorrichtung 3 weist eine Tragstruktur 13, eine Führungseinrichtung 14 und mindestens zwei Transporteinrichtungen 15.1, 15.2, 15.3, 15.4, insbesondere eine erster Transporteinrichtung 15.1 und eine zweite Transporteinrichtung 15.2 auf.

Das Gehäuse 12 kann ein Bestandteil der Tragstruktur 13 sein. Die Tragstruktur 13 kann auch als Tragrahmen bezeichnet werden. Über die Tragstruktur 13 stützt sich das Gewicht der Vorrichtung 3 auf einem Boden ab.

Die Vorrichtung 3 weist mindestens zwei, insbesondere sieben, Behälterträger 17 zum Tragen von jeweils mindestens einem der Behälter 11 auf. Jeder der Behälterträger 17 ist zum Aufnehmen von mindestens einem Behälter 11, insbesondere von zwei Behältern 11, ausgebildet. Die Behälter 11 sind reversibel lösbar mit dem jeweiligen Behälterträger 17 verbunden, insbesondere auf einer Stellfläche des Behälterträgers 17 abgestellt.

Die Behälterträger 17 sind plattenförmig ausgebildet. Alternativ können die Behälterträger 17 wannenförmig ausgebildet sein und hierdurch die Teile 2 entweder mittels der Behälter 11 oder direkt aufnehmen, also ohne die Notwendigkeit zur Verwendung eines Behälters 11.

Vorzugsweise sind die Behälterträger 17 zum Aufnehmen von Behältern mit einer Normgröße ausgebildet. Die Behälter 11 sind vorzugsweise Eurobehälter.

Die Behälterträger 17 weisen vorzugsweise eine im Wesentlichen rechteckförmige Stellfläche auf, mit einer ersten Seitenlänge si in einem Bereich von 0,1 m bis 2 m, insbesondere von 0,2 m bis 1,6 m, insbesondere 0,5 m bis 1 m, und/oder einer zweiten Seitenlänge s₂ in einem Bereich von 0,2 m bis 4 m, insbesondere von 0,5 m bis 2 m.

Die Führungseinrichtung 14 ist an der Tragstruktur 13 angebracht. Die Führungseinrichtung 14 ist zum geführten Verlagern der Behälterträger 17 entlang einer Transportstrecke 18 ausgebildet. Die Transportstrecke 18 ist umlaufend geschlossen ausgebildet, insbesondere in der Form eines Rechtecks.

Entlang der Transportstrecke 18 sind die Behälterträger 17 rasterförmig anordenbar, insbesondere mit zwei Stellpositionen in Horizontalrichtung und vier Stellpositionen in Vertikalrichtung, insgesamt also in acht Stellpositionen.

Die Transportstrecke 18 umfasst mindestens zwei, insbesondere vier, Transportabschnitte 19.1, 19.2, 19.3, 19.4. Die jeweiligen Transportabschnitte 19.1 bis 19.4 sind jeweils einer der Transporteinrichtungen 15.1, 15.2, 15.3, 15.4 zugeordnet.

Innerhalb des jeweiligen Transportabschnitts 19.1 bis 19.4 ist die Transportstrecke geradlinig ausgebildet. Im ersten und dritten Transportabschnitt 19.1, 19.3 ist die Transportstrecke vertikal orientiert. Im zweiten und vierten Transportabschnitt 19.2, 19.4 ist die Transportstrecke 18 horizontal orientiert.

Zwei aneinander angrenzende Transportabschnitte 19.1 bis 19.4 sind vorzugsweise senkrecht zueinander orientiert oder liegen auf derselben Geraden.

Die Transportstrecke 18 erstreckt sich in einer Transportebene 21. Die Führungseinrichtung 14 ist zum geführten Verlagern der Behälterträger 17 in zwei, insbesondere genau zwei, aufeinander senkrecht stehende Raumrichtungen, insbesondere die Vertikalrichtung und eine Horizontalrichtung, ausgebildet. Die Verlagerung der Behälterträger 17 in eine dritte, dazu senkrechte Raumrichtung, ist gesperrt. Im Bereich des Zu- und/oder Abführens der Behälter kann die Beschränkung auf die zweidimensionale ... fortbestehen oder aufgehoben sein.

Die Transporteinrichtung 15.1 ist zum Verlagern der mindestens zwei, insbesondere von mindestens drei, insbesondere von genau drei, Behälterträgern 17 entlang des ersten Transportabschnitts 19.1 ausgebildet. Zwar sind an der ersten Transporteinrichtung 15.1 insgesamt vier Behälterträger 17 anordenbar, bei einer vollständigen Belegung aller vier Stellpositionen können die Behälterträger 17 von der ersten Transporteinrichtung 15.1 aber nur gehalten und nicht verlagert werden.

Entlang der Transportstrecke 18 ist ein fester Transportabstand x₁ zwischen aufeinander folgende Behälterträger 17 durch die erste Transporteinrichtung 15.1 festgelegt.

Die zweite Transporteinrichtung 15.2 ist zum Verlagern jeweils nur eines Behälterträgers 17 ausgebildet. Sind zwei Behälterträger 17 an der zweiten Transporteinrichtung 15.2 angeordnet, werden diese von der zweiten Transporteinrichtung 15.2 nur gehalten, aber nicht verlagert. In dem zweiten Transportabschnitt 19.2 werden die Behälterträger 17 in einem Transportabstand x₂ gehalten. Der zweite Transportabstand x₂ unterscheidet sich vorzugsweise von dem ersten Transportabstand x₁, insbesondere ist der zweite Transportabstand x₂ größer als der erste Transportabstand x₁.

Die dritte Transporteinrichtung 15.3 entspricht der ersten Transporteinrichtung 15.1. Die vierte Transporteinrichtung 15.4 entspricht der zweiten Transporteinrichtung 15.2. Der erste und der dritte Transportabstand x₁, x₃ sind identisch und der zweite und der vierte Transportabstand x₂, x₄ sind identisch.

Die zweite Transporteinrichtung 15.2 ist zum Verlagern eines Behälterträgers 17 in dem zweiten Transportabschnitt 19.2 entlang der Transportstrecke 18 relativ zu den Behälterträgern 17 in dem ersten Transportabschnitt 19.1 ausgebildet. Mit anderen Worten sind die Transportabstände x₁, x₂, x₃, x₄ innerhalb des jeweiligen Transportabschnitts 19.1 bis 19.4 festgelegt. Zwischen den benachbarten Transportabschnitten 19.1 bis 19.4 sind die Transportabstände zwischen aufeinander folgenden Behälterträgern 17 entlang der Transportstrecke 18 unterschiedlich, insbesondere veränderbar.

Der jeweilige Behälterträger 17 umfasst ein Behälterkontaktmittel 22 und ein Führungsmittel 23. Das Behälterkontaktmittel 22 ist als rechteckförmige Platte zum Ausbilden der Stellfläche ausgebildet. Das Führungsmittel 23 ist als Führungsschlitten ausgebildet.

Die Führungseinrichtung 14 umfasst ein Gegen-Führungsmittel 24, insbesondere eine Führungsschiene, an welcher das Führungsmittel 23 linear verschiebbar gelagert ist. Das Führungsmittel 23 und das Gegen-Führungsmittel 24 bilden ein Gleitlager. Das Führungsmittel 23 und/oder das Gegen-Führungsmittel 24 können hierzu einen Gleitlagerwerkstoff umfassen, insbesondere eine Kupfer-Legierung, insbesondere eine Kupfer-Zinn-Legierung, und/oder einen Kunststoff, insbesondere PTFE, und/oder eine Messing-Legierung.

Der jeweilige Behälterträger 17 ist in der Führungseinrichtung 14 vorzugsweise derart geführt, dass dessen Orientierung im Raum, insbesondere um eine zu der Transportebene 21 senkrechte Achse, vollständig festgelegt ist. Hierdurch werden die Behälter 11 auf den Behälterträgern 17 und die Teile 2 in den Behältern 11 besonders zuverlässig gehalten. Hierzu wirken das Führungsmittel 23 und das Gegen-Führungsmittel 24 derart zusammen, dass der Drehfreiheitsgrad um die Normale zur Transportebene 21 gesperrt ist, insbesondere, dass sämtliche Drehfreiheitsgrade gesperrt sind. Das Führungsmittel 23 ist an dem Gegen-Führungsmittel 24 derart befestigt und das Behälterkontaktmittel 22 ist an dem Führungsmittel 23 derart befestigt, dass die Stellfläche horizontal orientiert ist.

Um die Ausrichtung der Behälterträger 17 besonders zuverlässig festzulegen, sind zusätzliche Maßnahmen vorgesehen. Die Behälterträger 17 weisen zusätzlich zu dem Führungsmittel 23 ein Ausrichtmittel 25 zum Festlegen der Orientierung des Behälterträgers 17 auf. Das jeweilige Ausrichtmittel 25 ist zum, insbesondere formschlüssigen, Zusammenwirken mit einem Gegen-Ausrichtmittel 26 der jeweiligen Transporteinrichtung 15.1 bis 15.4 ausgebildet.

Das Ausrichtmittel 25 weist einen ersten Eingriffsabschnitt 25.1 und einen zweiten Eingriffsabschnitt 25.2 auf. Die beiden Eingriffsabschnitte 25.1 25.2 sind vorzugsweise in Richtung senkrecht zu der Transportebne 21 voneinander beabstandet angeordnet. Mittels der beiden Eingriffsabschnitte 25.1, 25.2 können zwei aneinander angrenzende Transporteinrichtungen 15.1 bis 15.4 zeitgleich zum Festlegen der Orientierung des Behälterträgers 17 mit dem Ausrichtmittel 25 in Eingriff stehen.

Die jeweilige Transporteinrichtung 15.1 bis 15.4 weist ein angetriebenes Transportmittel 27.1 bis 27.4, insbesondere eine Förderkette, auf. Alternativ können andere Transportmittel, vorzugsweise endlos umlaufende Transportmittel, beispielsweise Förderriemen, vorgesehen sein. An dem jeweiligen Transportmittel 27.1 bis 27.4 sind, insbesondere über vorstehende Kettenstifte, mindestens ein, insbesondere mehrere, Mitnehmer 28 angebracht.

Die Mitnehmer 28 sind an dem jeweiligen Transportmittel 27.1 bis 27.4 fest, insbesondere dauerhaft, angebracht. Mit den Behälterträgern 17 sind die Mitnehmer 28 reversibel koppelbar. So weisen die jeweiligen Behälterträger 17 ein Mitnehmer-Eingriffsmittel 29 auf, welches insbesondere an dem Führungsmittel 23 angebracht ist.

Die Transportmittel 27.1 bis 27.4 sind durch mindestens eine, insbesondere jeweils mindestens eine, insbesondere genau eine, Motoreinheit 30.1, 30.2, 30.3, 30.4 angetrieben. Insbesondere weist jede Transporteinrichtung 15.1 bis 15.4 eine eigene Motoreinheit 30.1 bis 30.4 auf. Alternativ können die Transportmittel 27.1 bis 27.4 unterschiedlicher Transporteinrichtungen 15.1 bis 15.4 mechanisch, insbesondere mittels eines Getriebes, gekoppelt sein, wodurch die Anzahl an erforderlichen Motoreinheiten 30.1 bis 30.4 geringer sein kann, als die Anzahl der Transporteinrichtungen 15.1 bis 15.4.

Die Eingriffsabschnitte 25.1, 25.2 sind am dem Mitnehmer-Eingriffsmittel 29 ausgebildet. Vorzugsweise ist mindestens ein Eingriffsabschnitt 25.1, 25.2, insbesondere sind sämtliche Eingriffsabschnitte 25.1, 25.2, des jeweiligen Ausrichtmittels 25 durch das Mitnehmer-Eingriffsmittel 29 gebildet, insbesondere mit diesem identisch. Das Gegen-Ausrichtmittel 26 kann durch den jeweiligen Mitnehmer 28 gebildet sein.

Das Mitnehmer-Eingriffsmittel 29 ist in der Form eines Quaders, insbesondere mit quadratischem Querschnitt, insbesondere in einer Parallelebene zu der Transportebene 21, ausgebildet. Die Mitnehmer 28 sind gabelförmig bzw. in der Form des Buchstaben U ausgebildet. Die miteinander in Eingriff stehenden Mitnehmer 28 und Mitnehmer-Eingriffsmittel 29 sind, insbesondere um eine Senkrechte zur Transportebene 21, drehfest und, insbesondere entlang der Transportstrecke 18, translatorisch fest miteinander verbunden.

Die zueinander orientierten Schenkel des jeweiligen U-förmigen Mitnehmers 28 bilden das Gegen-Ausrichtmittel 26 zum Zusammenwirken mit dem jeweiligen Ausrichtmittel 25 zum Festlegen der Orientierung des jeweiligen Behälterträgers 17.

Ein von den Behältern 11 beim Verlagern entlang der Transportstrecke 18 überstrichener Bewegungsraum hat eine Höhe h und eine Breite b. Die Breite b ist horizontal und parallel zu der Transportebene 21 orientiert. Der Bestimmung des Bewegungsraums ist die maximal mögliche Größe der, insbesondere quaderförmigen, Behälter 11 zugrunde gelegt, für welche die Vorrichtung vorgesehen ist, insbesondere bei welcher ein vollständiger Durchlauf durch die gesamte Transportstrecke 18 gerade noch kollisionsfrei möglich ist.

Die Gesamthöhe H und die Gesamtbreite B der Vorrichtung 3 sind durch die Abmessungen des Gehäuses 12 bestimmt. Die Gesamtbreite ist horizontal und parallel zu der Transportebene 21 orientiert.

Die Gesamthöhe H und/oder die Höhe h des Bewegungsraums liegen vorzugsweise in einem Bereich von 1 m bis 10 m, insbesondere von 1,5 m bis 6 m, insbesondere von 2 m bis 4 m. Die Gesamtbreite B und/oder die Breite b des Bewegungsraums liegen vorzugsweise in einem Bereich von 1 m bis 10 m, insbesondere von 1,5 bis 6 m, insbesondere von 2 m bis 4 m.

Ein erzielbarer Flächennutzungsgrad beträgt 75%. Dieser ist bestimmt durch ein Verhältnis der Schnittflächen der kleinsten konvexen Einhüllenden aller Behälter 11 maximal möglicher Größe mit der Transportebene 21 und einer Schnittfläche der kleinsten konvexen Einhüllenden des Bewegungsraums mit der Transportebene 21.

Ein Gesamt-Flächennutzungsgrad beträgt 70%. Dieser ist bestimmt durch ein Verhältnis der Schnittflächen der kleinsten konvexen Einhüllenden aller Behälter 11 maximal möglicher Größe mit der Transportebene 21 und einer Schnittfläche der kleinsten konvexen Einhüllenden des Gehäuses 12 mit der Transportebene 21.

Die Vorrichtung 3 ist im Wesentlichen symmetrisch ausgebildet. Die Behälterträger 17 sind zweiseitig gelagert, insbesondere an zwei Lagerstellen, die in Richtung senkrecht zu der Transportebene 21 zueinander beabstandet angeordnet sind, insbesondere in einer Orthogonalprojektion auf die Transportebene 21 einander überlappen. Die Führungseinrichtung 14 und die Transporteinrichtungen 15.1 bis 15.4 sind vorzugsweise spiegelsymmetrisch ausgebildet.

Die Vorrichtung 3 kann eine nicht dargestellte Behälterzuführeinrichtung zum Zuführen von Behältern 11 in die Vorrichtung 3, insbesondere an den jeweiligen Behälterträger 17, und/oder eine nicht dargestellte Behälterabgabeeinrichtung zum automatischen Abgeben von Behältern aus der Vorrichtung 3, insbesondere von den Behälterträgern 17, aufweisen.

Die Funktionsweise des Systems 1 und der Vorrichtung 3 ergibt sich aus der vorstehenden Beschreibung und aus den Figuren. Die Funktionsweise wird ergänzend wie folgt beschrieben:
Die Vorrichtung 3 ist mit den Behältern 11 bestückt. Die Maschine 4 stellt die Teile 2 her und stellt diese an der Abgabestelle 7 bereit. Mittels des Förderbandes 6 werden die Teile 2 zu der Teilezuführeinrichtung 8 gefördert.

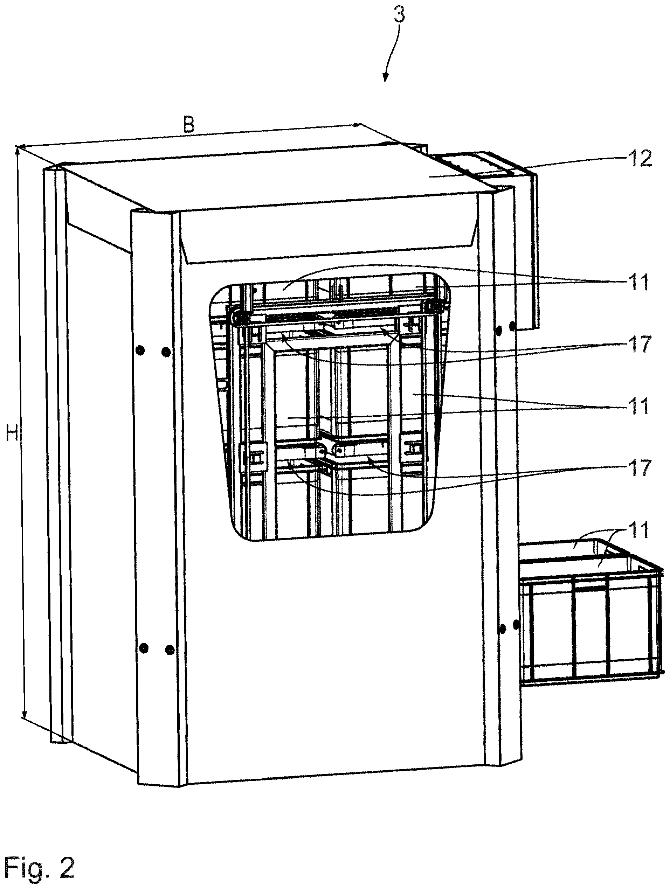

Einer der Behälter 11 ist an der Stellposition zum Beladen mit den Teilen 2 angeordnet, insbesondere in Bezug auf die Fig. 2 unten rechts. Die Transporteinrichtungen 15.1 bis 15.4 stehen still. Mittels des Stellmechanismus 10 wird das Leitelement 9 in den Bewegungsraum der Behälter 11 verlagert. Die Teile 2 fallen entlang des Leitelements 9 in den Behälter 11.

Nach Abschluss der Befüllung wird das Leitelement 9 aus dem Bewegungsraum zurückgezogen.

Der befüllte Behälter 11 wird mittels der Transporteinrichtungen 15.1 bis 15.4 innerhalb der Vorrichtung 3 verlagert. Hierzu wird zunächst ausschließlich die Transporteinrichtung 15.1 betätigt, so dass die Behälterträger 17 im rechten Teil der Vorrichtung 3 vertikal nach oben verlagert werden. Die Transporteinrichtung 15.1 wird gestoppt. In diesem Zustand ist die Vorrichtung 3 in der Fig. 3 dargestellt.

Die Transporteinrichtung 15.4 wird betätigt, so dass der nun alleine ganz unten angeordnete Behälterträger 17 nach rechts in die Beladestellung gefördert wird. Die Transporteinrichtung 15.4 wird gestoppt.

Um den Weitertransport der Behälter 11 vorzubereiten, wird sodann die Transporteinrichtung 15.3 aktiviert, um die Behälterträger 17 der linken Seite der Vorrichtung 3 nach unten zu verlagern. Die Transporteinrichtung 15.3 wird gestoppt. Die zweite Transporteinrichtung 15.2 wird aktiviert, um den alleine ganz oben angeordneten Behälterträger 17 nach links zu verlagern. Die zweite Transporteinrichtung 15.2 wird gestoppt. Der Ausgangszustand ist wiederhergestellt, wobei der befüllte Behälter 11 um eine Position entlang der Transportstrecke 18, insbesondere in Bezug auf die Fig. 3 gegen den Urzeigersinn, weiter verlagert wurde.

Bei dieser Art der Verlagerung ist unter den Stellpositionen mindestens eine Leerstelle erforderlich. Diese kann innerhalb der geschlossenen Transportstrecke 18 vorgesehen sein oder außerhalb und zum Transport der Behälterträger 17 einen dieser reversibel aufnehmen.

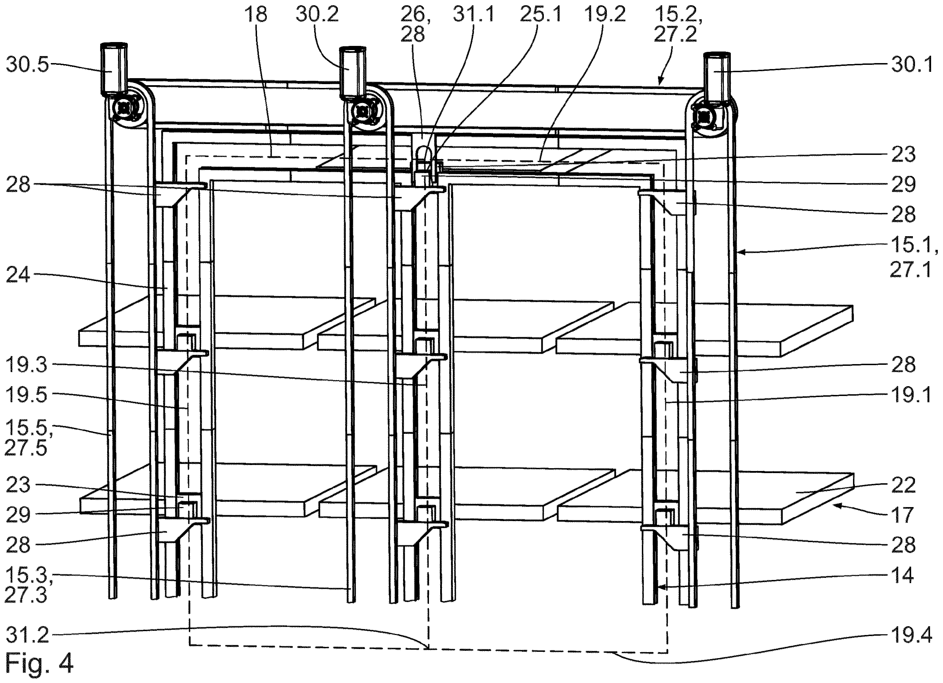

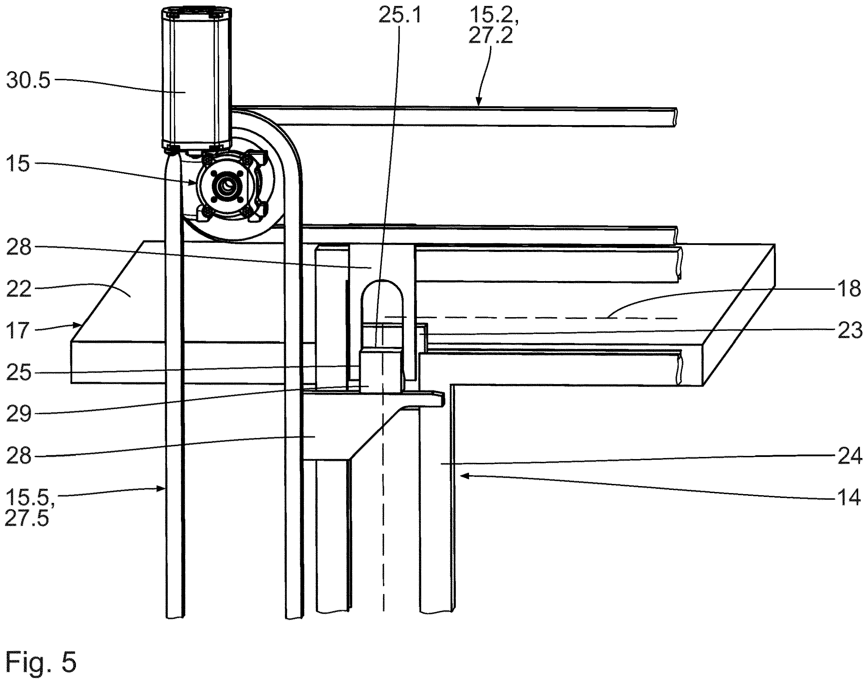

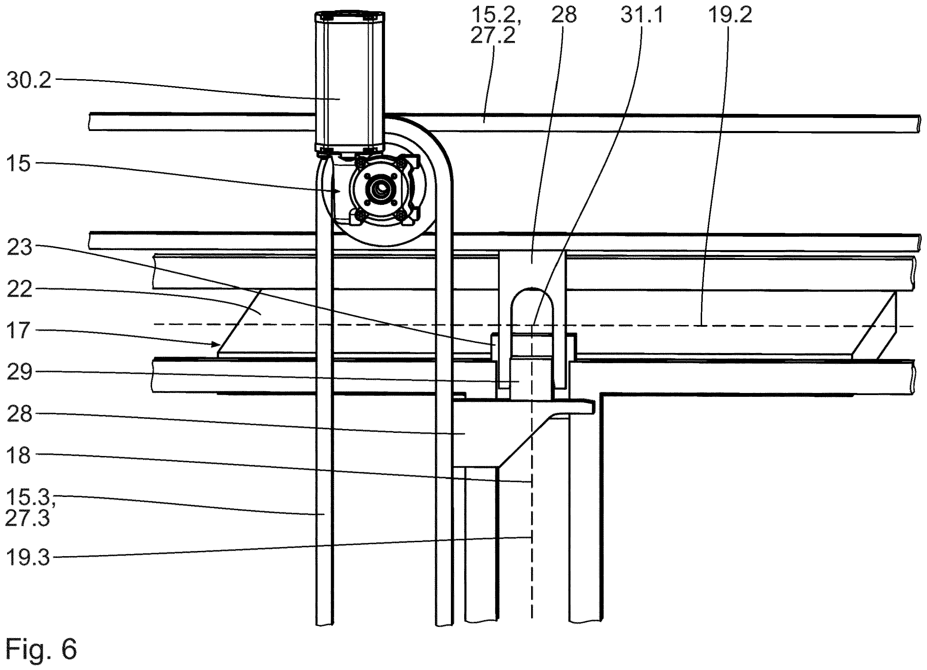

Anhand der Fig. 4 bis 6 ist eine weitere Ausführungsform der Vorrichtung 3 beschrieben. Im Unterschied zu der vorstehend beschriebenen Ausführungsform sind eine weitere Transporteinrichtung 15.5, insbesondere mit einem weiteren Transportmittel 27.5 und einer weiteren Motoreinheit 30.5, bzw. ein weiterer Transportabschnitt 19.5 vorgesehen. Im Bereich des fünften Transportabschnitts 19.5 ist die Transportstrecke 18 vertikal orientiert. Es liegen drei horizontal voneinander beabstandete Transportabschnitte 19.1, 19.3, 19.5 mit vertikaler Orientierung vor. Somit sind pro Stellposition in Vertikalrichtung drei Stellpositionen in Horizontalrichtung vorgesehen. Es liegt eine Rasteranordnung mit 3 x 4 Stellpositionen vor.

Die von der Führungseinrichtung 14 gebildete Transportstrecke 18 weist eine obere Transportstreckenkreuzung 31.1 und eine untere Transportstreckenkreuzung 31.2 auf. Die Transportstreckenkreuzungen 31.1, 31.2 sind T-förmig ausgebildet. An der Transportstreckenkreuzung 31.1 grenzt der dritte Transportabschnitt 19.3 an den zweiten Transportabschnitt 19.2 an, insbesondere in der Mitte zwischen den beiden Enden des zweiten Transportabschnitts 19.2.

Die zweite, nicht im Detail dargestellte Transportstreckenkreuzung 31.2 ist zwischen dem dritten Transportabschnitt 19.3 und dem vierten Transportabschnitt 19.4 ausgebildet.

Entsprechende Transportstreckenkreuzungen 31.1, 31.2 erhöhen wesentlich die Möglichkeiten zum Verlagern von Behälterträgern 17 in der Vorrichtung 3. Zudem ist hierdurch die rasterförmige Anordnung von Stellpositionen beliebig erweiterbar. Beispielsweise können in Vertikalrichtung zwei bis zwanzig, insbesondere drei bis zehn, insbesondere vier bis acht, Stellpositionen vorgesehen sein. In Horizontalrichtung, insbesondere parallel zu der Stellebene 21, können zwei bis zwanzig, insbesondere drei bis zehn, insbesondere vier bis acht Stellpositionen vorgesehen sein.

Der zwischen zwei benachbarten, gleich orientierten Transportabschnitten 19.1, 19.5 angeordnete Transportabschnitt 15.3 ist vertikal orientiert. Eine derartige Vorrichtung 3 ist besonders robust und strukturell einfach umsetzbar. Prinzipiell können auch horizontal orientierte Transportabschnitte zwischen zwei benachbarten, horizontal orientierten Transportabschnitten, in Form von Horizontaltraversen, vorgesehen sein.

Ein weiterer Unterschied zu der vorhergehend beschriebenen Ausführungsform besteht in der Ausbildung der Mitnehmer 28 der Transporteinrichtungen 15.1, 15.3, 15.5. Diese sind ohne ein Gegen-Ausrichtmittel 26 ausgebildet. Lediglich die Mitnehmer 28 der Transporteinrichtungen 15.2, 15.4 mit horizontalem Transportabschnitt 19.2, 19.4 sind mit entsprechenden Gegen-Ausrichtmitteln 26 ausgebildet. Die Ausbildung der Mitnehmer 28 der Transporteinrichtungen 15.2, 15.4 mit entsprechenden Gegen-Ausrichtmitteln 26 ist ausreichend, um ein Kippen der Behälterträger 17 aus der Horizontalebene zuverlässig zu vermeiden.

Die Vorrichtung 3 ist weiterhin im Wesentlichen spiegelsymmetrisch zu einer parallel zu der Transportebene 21 orientierten Spiegelebene ausgebildet.

Die Funktionsweise der Vorrichtung 3.1 entspricht der Funktionsweise der vorstehend beschriebenen Ausführungsform.

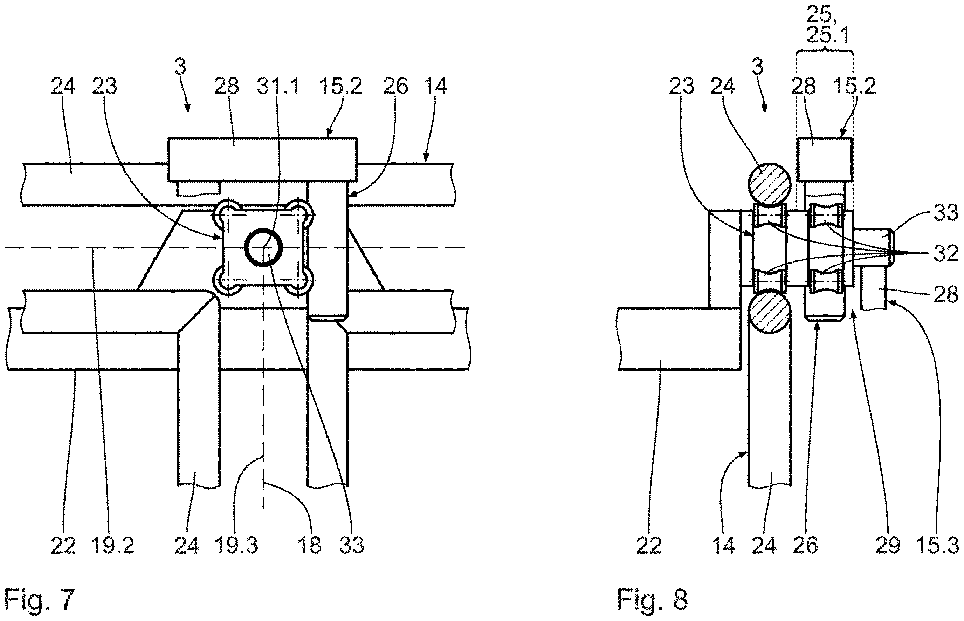

Anhand der Fig. 7 und 8 ist eine weitere Ausführungsform der Vorrichtung 3 beschrieben. Im Unterschied zu der vorstehend beschriebenen Ausführungsform weisen die Führungsmittel 23, insbesondere die Führungsschlitten, Schienenrollen 32 zum Ausbilden einer Rollenlagerung mit dem Gegen-Führungsmittel 24 der Führungseinrichtung 14 auf. Das Gegen-Führungsmittel 24 umfasst Führungsschienen, insbesondere mit kreisförmigem Querschnitt. Vorzugsweise umfasst das jeweilige Führungsmittel 23 mindestens vier, insbesondere genau vier, der Schienenrollen 32 zum beidseitig geführten Zusammenwirken mit den Führungsschienen des Gegen-Führungsmittels 24. Die Drehachsen der Schienenrollen 32 liegen vorzugsweise auf den Eckpunkten eines Quadrats.

Das Ausrichtmittel 25 kann entsprechend dem Führungsmittel 23, insbesondere mit Schienenrollen 32, ausgebildet sein. Das Gegen-Ausrichtmittel 26 kann dementsprechend Führungsschienen aufweisen. Die Führungsschienen der Gegen-Ausrichtmittel 26 sind vorzugsweise entsprechend den Führungsschienen der Gegen-Führungsmittel 24 ausgebildet.

Das Ausrichtmittel 25 weist nur einen einzigen Eingriffsabschnitt 25.1. Das Mitnehmer-Eingriffsmittel 29 bildet den Eingriffsabschnitt 25.1 aus und weist ferner einen bolzenförmigen Fortsatz 33 auf. Die Mitnehmer 28 der horizontal orientierten Transporteinrichtungen 15.2, 15.4 koppeln an das Mitnehmer-Eingriffsmittel 29 im Bereich des Eingriffsabschnitts 25.1 an. Die Mitnehmer 28 der vertikal orientierten Transporteinrichtungen 15.1, 15.3, 15.5 koppeln an das Mitnehmer-Eingriffsmittel 29 im Bereich des bolzenförmigen Fortsatzes 33 an.

Die Funktionsweise der Vorrichtung 3.1 entspricht der Funktionsweise der vorstehend beschriebenen Ausführungsform.

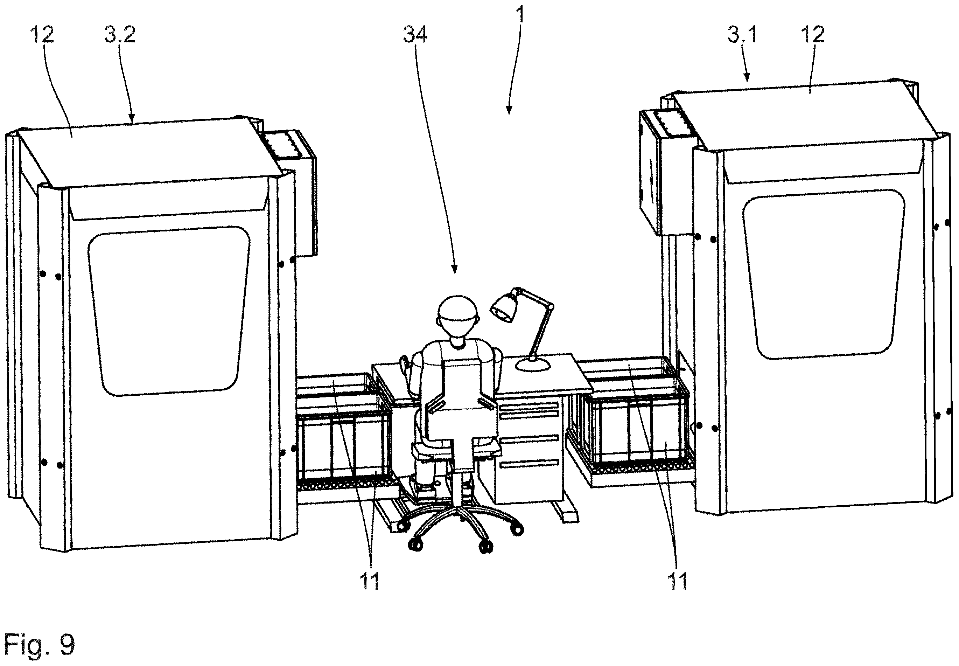

In Fig. 9 ist eine weitere Ausführungsform des Systems 1 beschrieben. Das System 1 umfasst zwei der Vorrichtungen 3.1, 3.2 und eine Bearbeitungsstation 34. In der Bearbeitungsstation 34 werden die Teile manuell, also von einem Arbeiter oder automatisiert, also mittels einer Maschine bearbeitet und/oder inspiziert.

Die Vorrichtung 3.1 ist als Speicher für Teile 2 ausgebildet, also zum, insbesondere automatisierten, Aufnehmen von Teilen 2, insbesondere in die in der Vorrichtung 3 angeordneten Behälter 11. Die zweite Vorrichtung 3.2 ist als Bunker ausgebildet, also zum, insbesondere automatisierten, Abgeben von Teilen 2, insbesondere aus den in der Vorrichtung 3 angeordneten Behältern 11. Die beiden Vorrichtungen 3.1, 3.2 sind fördertechnisch miteinander verbunden. Zwischen den Vorrichtungen 3.1, 3.2 ist die Bearbeitungsstation 34 angeordnet.

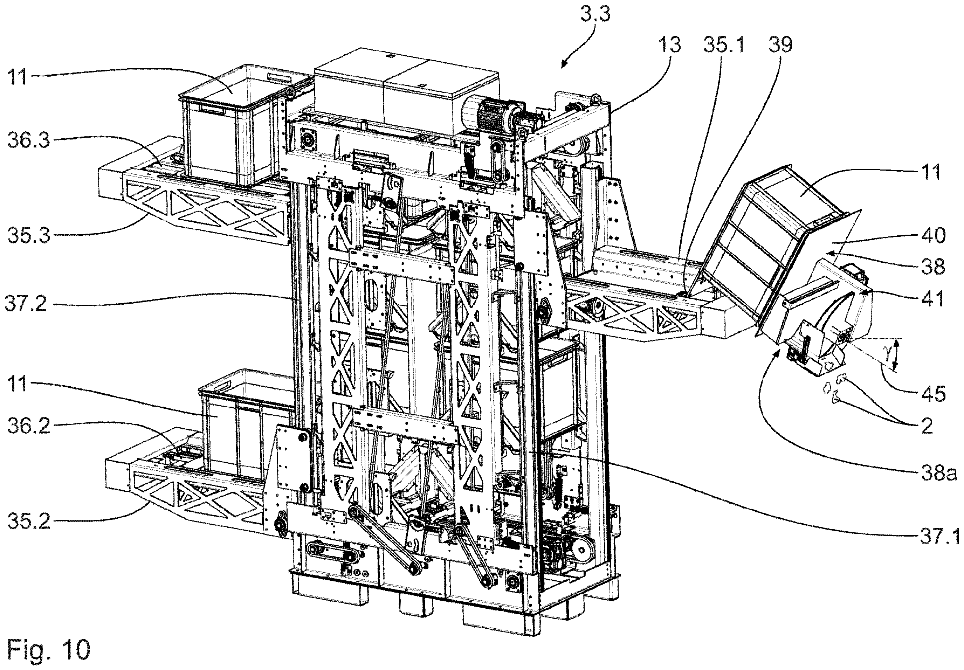

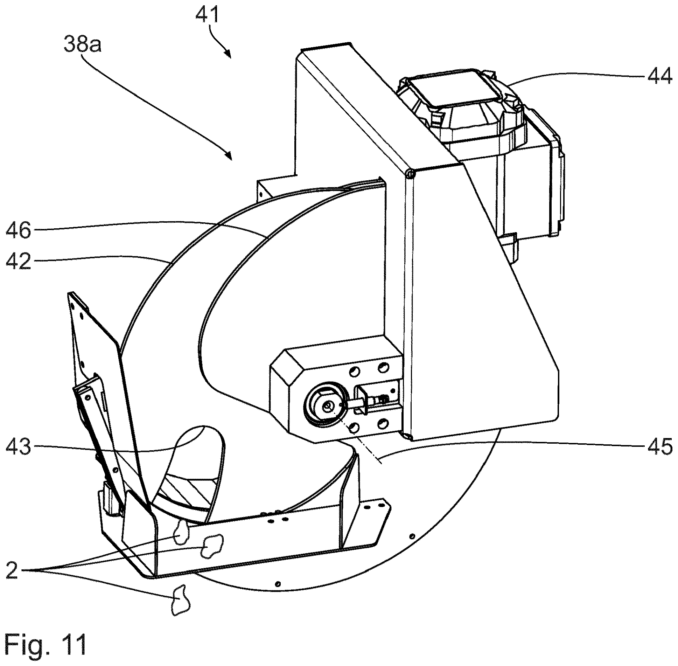

Anhand der Fig. 10 und 11 ist eine weitere Ausführungsform der Vorrichtung 3.3 beschrieben. Die Vorrichtung 3.3 umfasst im Unterschied zu den vorstehend beschriebenen Ausführungsformen drei Behälterwechseleinrichtungen 35.1, 35.2, 35.3. Die jeweilige Behälterwechseleinrichtung 35.1, 35.2, 35.3 ist als kombinierte Behälterzuführ- und -abgabeeinrichtung ausgebildet. Mittels der jeweiligen Behälterwechseleinrichtung 35.1, 35.2, 35.3 sind die Behälter 11, insbesondere jeweils ein einziger Behälter 11, automatisiert in die Vorrichtung 3.3 zuführbar und automatisiert aus der Vorrichtung 3.3 entnehmbar. Hierzu weisen die Behälterwechseleinrichtungen 35.1, 35.2, 35.3 jeweils einen Linearantrieb 36.2, 36.3 zum Verlagern der Behälter in bzw. aus der Vorrichtung 3.3 auf.

Die beiden Behälterwechseleinrichtungen 35.1 und 35.2 sind in vertikaler Richtung verlagerbar, insbesondere relativ zu der Tragstruktur 13 verlagerbar, ausgebildet. Hierzu weist die Vorrichtung 3.3 an der Tragstruktur 13 vorgesehene Vertikalführungsmittel 37.1, 37.2, insbesondere Linearführungen, und nicht dargestellte Vertikalantriebe zum automatisierten Verlagern der Behälterwechseleinrichtung 35.1, 35.2 relativ zu der Tragstruktur 13 auf.

Die Vorrichtung 3.3 weist ferner eine Vereinzelungseinheit 38a zum vereinzelten Abgeben der Teile 2 aus der Vorrichtung 3.3, insbesondere aus einem Behälter 11, auf. Die Vereinzelungseinheit 38a ist an der ersten Behälterwechseleinrichtung 35.1 vorgesehen. Die Vereinzelungseinheit 38a umfasst einen Kippmechanismus 39 zum Kippen des Behälters 11, insbesondere um mehr als 90°, einen Deckel 40 zum zumindest abschnittsweisen Verschließen einer Öffnung des Behälters 11 und ein Dosiermittel 41 zum dosierten Abgeben der Teile 2.

Das Dosiermittel 41 ist in der Fig. 11 weiter im Detail dargestellt. Das Dosiermittel 41 umfasst eine Dosierscheibe 42 mit mindestens einer Dosieröffnung 43 und einen Dosiermotor 44 zum Drehantreiben der Dosierscheibe 42. Eine Drehachse 45 ist in einer Dosierstellung zu einer Horizontalebene um einen Winkel γ geneigt orientiert zum schwerkraftbasierten Fördern der Teile 2 durch die Dosieröffnung 43.

Das Dosiermittel 41 weist eine Dosierblende 46 auf. Die Dosierblende 46 ist im Wesentlichen parallel zu der Dosierscheibe 42 orientiert. Die Dosierblende 46 überlappt die Dosierscheibe 42 abschnittsweise, insbesondere hälftig, insbesondere in Umfangsrichtung einseitig zwischen einem Kopf-und einem Fußpunkt der Dosierblende 46. Insbesondere überlappt die Dosierblende 46 die mindestens eine Dosieröffnung 43 über mindestens 20 %, insbesondere mindestens 30 % der Winkelstellungen der Dosierscheibe 42 vollständig. Durch die zumindest abschnittsweise Überlappung der Dosierscheibe 42, insbesondere der Dosieröffnung 43, mit der Dosierblende 46 wird ein Einklemmen der Teile 2 beim Drehanterieben der Dosierscheibe 42 relativ zu der Dosierblende 46 zuverlässig verhindert.

Mittels der Behälterwechseleinrichtung 35.1, 35.2, 35.3 sind die Behälter 11 automatisiert aus bzw. in die Vorrichtung 3.3 verlagerbar. Dadurch, dass die Behälterwechseleinrichtungen 35.1, 35.2 relativ zu der Tragstruktur 13 vertikal verlagerbar sind, kann die Zufuhr bzw. die Entnahme der Behälter 11 flexibel an unterschiedlichen Vertikalpositionen erfolgen.

Hierdurch kann die Handhabung der Behälter 11 besonders zeiteffizient erfolgen.

Die Vereinzelungseinheit 38a gewährleistet eine automatisierte Abgabe der Teile 2 aus den Behältern 11, insbesondere eine portionsweise Abgabe, insbesondere eine Einzelabgabe, der Teile 2. Hierdurch kann eine gewünschte Anzahl von Teilen 2 automatisiert aus der Vorrichtung 3.3 abgegeben werden. Ein manueller Arbeitsschritt zum Zählen der abzugebenden Teile 2 kann somit entfallen. Die Vorrichtung 3.3 ist besonders zeiteffizient und wirtschaftlich im Betrieb.

Mit der starr befestigten, nicht verlagerbaren Behälterwechseleinrichtung 35.3 steht eine zusätzliche Möglichkeit zur Abgabe der Behälter 11 und/oder zum Zwischenspeichern eines Behälters 11 zur Verfügung. Die starre Behälterwechseleinrichtung 35.3 also auch die Behälterwechseleinrichtungen 35.1, 35.2 sind vorzugsweise modular ausgebildet und damit optional an der Vorrichtung 3.3 vorgesehen.

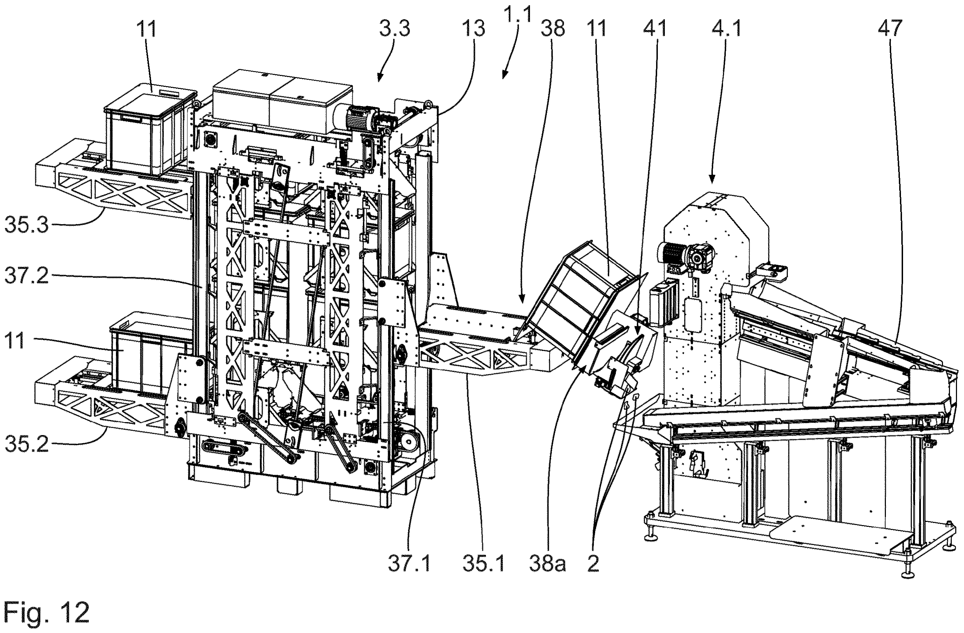

Anhand der Fig. 12 ist die Vorrichtung 3.3 in Kombination mit einer Maschine 4.1 zum Weiterverarbeiten der Teile 2 beschrieben. Die Vereinzelungseinheit 38a ist an einer fördertechnischen Verbindung 47 zwischen der Vorrichtung 3.3 und der Maschine 4.1 angeordnet. Die über die Vereinzelungseinheit 38a abgegebenen Teile 2 werden mittels der fördertechnischen Verbindung 47 automatisiert von der Vorrichtung 3.3 zu der Maschine 4.1 gefördert.

Das durch die Vorrichtung 3.3, die Maschine 4.1 und die fördertechnische Verbindung 47 gebildete System 1.1 ist vollständig automatisiert, insbesondere autonom, und damit besonders wirtschaftlich im betreibbar.

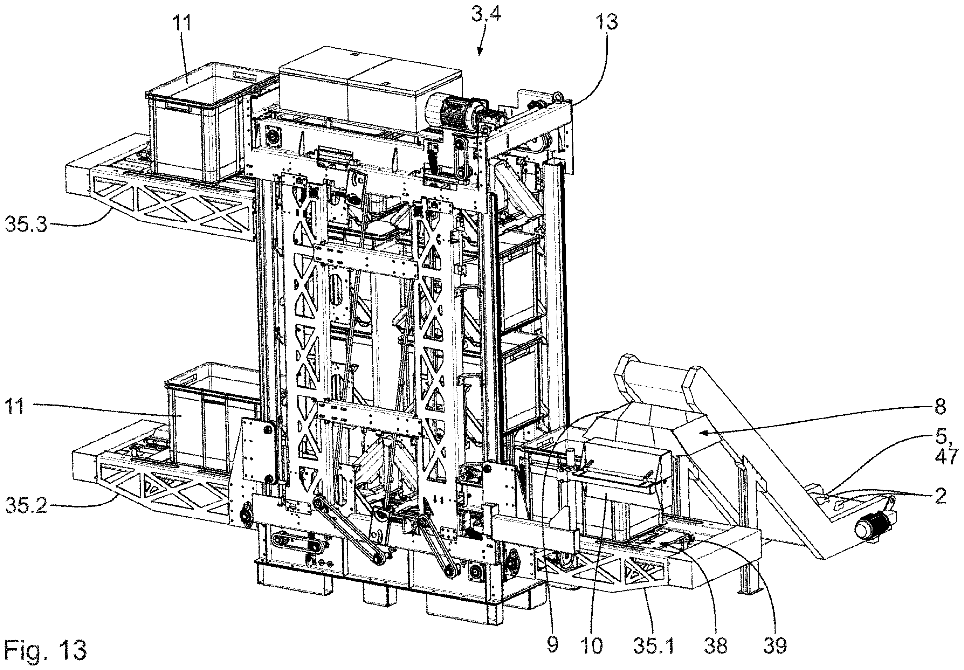

Anhand der Fig. 13 ist die Vorrichtung 3.4 gemäß einer weiteren Ausführungsform beschrieben. Im Unterschied zu den vorstehend beschriebenen Ausführungsformen weist die Vorrichtung 3.4, insbesondere zusätzlich zu der Teileabgabeeinrichtung 38, die Teilezuführeinrichtung 8 auf. Die Teilezuführeinrichtung 8 weist das Leitelement 9 und den Stellmechanismus 10 auf. Das Leitelement 9 ist als Teilebehälter, insbesondere als Pufferbehälter für die Teile 2, ausgebildet. Mittels des Stellmechanismus 10 ist das Leitelement 9 horizontal verlagerbar und um eine horizontale Achse kippbar. Mittels der Teilezuführeinrichtung 8 kann das Einfüllen der Teile 2 in den Behälter 11 gesteuert werden, insbesondere durch Steuern der Einfüllposition. Damit kann eine Vergleichmäßigung der Anordnung der Teile 2 in dem Behälter 11 gewährleistet werden. Die Teilezuführeinrichtung 8 ist damit als Verteileinrichtung zum Vergleichmäßigen der Anordnung der Teile 2 in dem Behälter 11 ausgebildet.

Mittels der Teilefördereinheit 5 werden die Teile 2 zu der Teilezuführeinrichtung 8 verlagert. Die Teilefördereinheit 5 kann zwischen einer Maschine 4 zum Herstellen der Teile 2 und der Vorrichtung 3.4 angeordnet sein. Insbesondere ist die Teilefördereinheit 5 als fördertechnische Verbindung 47 zum automatisierten Verlagern der Teile 2 zwischen der Maschine 4 und der Vorrichtung 3.4 ausgebildet.

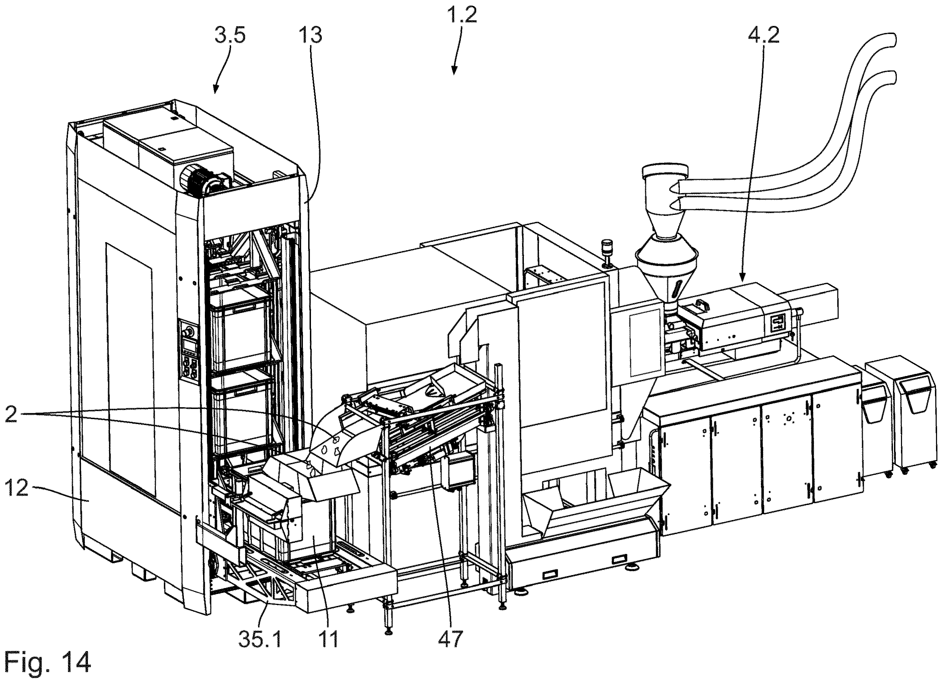

Anhand der Fig. 14 ist die Vorrichtung 3.5 gemäß einer weiteren Ausführungsform beschrieben, als Bestandteil eines Systems 1.2. Das System 1.2 umfasst eine Maschine 4.2, insbesondere eine Spritzgussmaschine, die Vorrichtung 3.5 und eine fördertechnische Verbindung 47 zum automatisierten Verlagern der Teile 2 zwischen der Maschine 4.2 und der Vorrichtung 3.5. Die Vorrichtung 3.5 entspricht im Wesentlichen der Vorrichtung 3.4 in der Fig. 13.

Dadurch, dass das System 1.2 in der Materialflusskette stromabwärts der Maschine 4.2 die mit der Maschine 4.2 fördertechnisch verbundene Vorrichtung 3.5 aufweist, kann die Handhabung der Teile 2 von der Herstellung bis zur Speicherung vollständig automatisiert erfolgen.

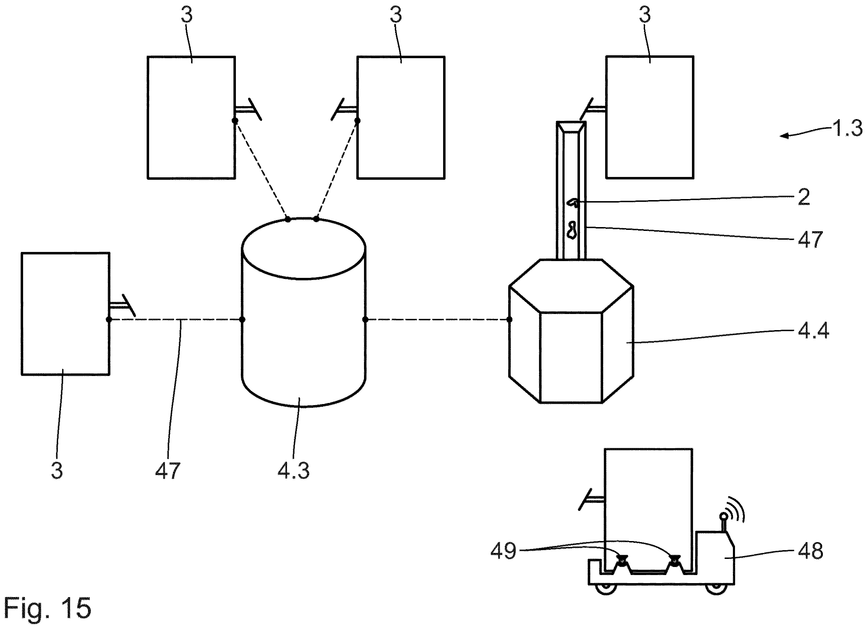

Anhand der Fig. 15 ist eine weitere Ausführungsform des Systems 1.3 beschrieben. Das System 1.3 umfasst mehrere, insbesondere zwei, der Maschinen 4.3, 4.4 zum Herstellen der Teile 2. Die mehreren Vorrichtungen 3 können identisch ausgebildet sein. Mittels fördertechnischer Verbindungen 47 sind die Teile 2 automatisiert zwischen der jeweiligen Maschine 4.3, 4.4 und einer der Vorrichtungen 3 verlagerbar. Die Maschine 4.3 kann eine Rundtaktmaschine sein. An der Maschine 4.3 können mehrere Bearbeitungsschritte an den Teilen 2 durchgeführt werden. Die Maschine 4.4 kann zur Endbearbeitung der Teile 2 vorgesehen sein. Die fertigen Teile 2 können von der Maschine 4.4 über die fördertechnische Verbindung 47 automatisiert in die als Speicher fungierende Vorrichtung 3 verlagert werden.

Vorzugsweise ist die jeweilige Vorrichtung 3 mobil ausgebildet. Hierzu kann die Vorrichtung 3 zur Kopplung mit einem separaten Fahrwagen 48 ausgebildet sein, insbesondere eine Fahrwagenkopplung 49 aufweisen. Der Fahrwagen 48 ist vorzugsweise fernsteuerbar. Insbesondere kann der Fahrwagen 48 automatisiert gesteuert werden.

Vorzugsweise ist das System 1.3 dazu ausgebildet, die jeweilige Vorrichtung 3 an den Maschinen 4.3, 4.4 automatisiert auszutauschen, wenn dies erforderlich ist, insbesondere wenn die Vorrichtung 3 einen bestimmten Füllstand erreicht, insbesondere voll oder entleert ist, und/oder, wenn die darin aufgenommenen Teile andernorts benötigt werden und/oder, wenn ein Herstellprozess abgeschlossen ist.

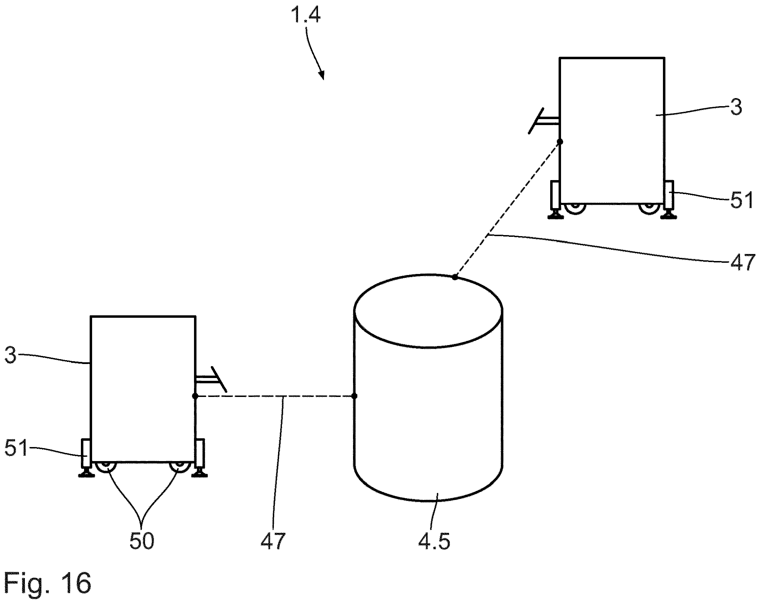

Anhand der Fig. 16 ist eine weitere Ausführungsform des Systems 1.4 beschrieben. Im Unterschied zu den vorstehend beschriebenen Ausführungsformen sind zwei der Vorrichtungen 3 an einer Maschine 4.5 zum Herstellen der Teile 2 angeordnet. Über fördertechnische Verbindungen 47 können die Teile 2 automatisiert zwischen der jeweiligen Vorrichtung 3 und der Maschine 4.5 verlagert werden. Vorzugsweise werden mittels einer der Vorrichtungen 3 die zu bearbeitenden Teile 2 bereitgestellt, bevor diese mittels der Maschine 4.5 bearbeitet werden. Die bearbeiteten Teile 2 werden über die fördertechnische Verbindung 47 in die zweite Vorrichtung 3 zugeführt und dort gespeichert.

Die jeweilige Vorrichtung 3 kann, insbesondere als Alternative zu dem separat ausgebildeten Fahrwagen 48, eine integrierte Fahreinheit 50 aufweisen, insbesondere mit einem integrierten Fahrantrieb. Das Steuern der Fahreinheit 50 kann, insbesondere wie vorstehend im Zusammenhang mit dem Fahrwagen 48 beschrieben, vollständig automatisiert erfolgen. Zum sicheren Festlegen der Anordnung der jeweiligen Vorrichtung 3 an der Maschine 4.5 kann die jeweilige Vorrichtung 3 eine Abstützeinheit 51 aufweisen. Die Abstützeinheit 51 kann einen Abstützaktor zum Entlasten der Fahreinheit 50 aufweisen. Die Abstützeinheit 51 ist vorzugsweise automatisiert steuerbar.

Das vorstehend beschriebene System 1 gewährleistet die Handhabung von Teilen 2, insbesondere in Behältern 11, in besonders wirtschaftlicher Weise. Die Taktzeiten einer Maschine 4 zum Herstellen von Teilen 2 passen oftmals nicht zu den Anforderungen nachgeschalteter Prozesse. Dies gilt insbesondere für die Taktzeiten von Spritzgussmaschinen. Das vorliegende System 1 löst dieses Problem durch Bereitstellen eines besonders platzsparenden, flexibel einsetzbaren, robusten Speichers in Form der vorstehend beschriebenen Vorrichtung 3. Die Vorrichtung 3 kann auch als Bunker zum flexiblen Ausgeben von Teilen, insbesondere Behältern 11, verwendet werden. Besonders wirtschaftlich ist eine Nutzung der Vorrichtung 3 als Speicher und Bunker, bei der sich eine Materialflusskette, insbesondere der Teilestrom, durch die Vorrichtung 3 erstreckt. Hierbei wirkt die Vorrichtung 3 insbesondere als Pufferspeicher.

## Patentansprüche

1. Vorrichtung (3, 3.1 bis 3.5) zum Bevorraten von Teilen (2), insbesondere von Spritzgussteilen, aufweisend
1.1 eine Tragstruktur (13),
1.2 eine Teilezuführeinrichtung (8) zum automatisierten Zuführen der Teile (2) in einen Behälter (11),
1.3 eine Teileabgabeeinrichtung (38) zum automatisierten Abgeben der Teile aus dem Behälter (11),
1.4 mindestens zwei Behälterträger (17) zum Tragen von jeweils mindestens einem der Behälter (11), insbesondere einem Eurobehälter,
1.5 eine an der Tragstruktur (13) ausgebildete Führungseinrichtung (14) zum geführten Verlagern der mindestens zwei Behälterträger (17) entlang einer Transportstrecke (18),
1.6 eine erste Transporteinrichtung (15.1) mit einem motorisch angetriebenen Transportmittel (27.1) zum Verlagern der mindestens zwei Behälterträger (17) entlang eines ersten Transportabschnitts (19.1) der Transportstrecke (18) in einem festgelegten Transportabstand (x₁) zueinander, und
1.7 eine zweite Transporteinrichtung (15.2) mit einem motorisch angetriebenen Transportmittel (27.2) zum Verlagern von mindestens einem der Behälterträger (17)
1.7.1 entlang eines zweiten, an den ersten Transportabschnitt (19.1) angrenzenden Transportabschnitts (19.2) der Transportstrecke und
1.7.2 entlang der Transportstrecke (18) relativ zu mindestens einem der Behälterträger (17) in der ersten Transporteinrichtung (15.1).

2. Vorrichtung (3, 3.1 bis 3.5) nach Anspruch 1, **dadurch gekennzeichnet, dass** die Teileabgabeeinrichtung (38) eine Vereinzelungseinheit (38a) zum Vereinzeln von Kleinteilen (2), insbesondere von 100 bis 100.000 Kleinteilen (2) pro Behälter (11), aufweist.

3. Vorrichtung (3, 3.1 bis 3.5) nach Anspruch 1 oder 2, **gekennzeichnet durch** eine Verteileinrichtung (8) zum Vergleichmäßigen der Anordnung der Teile (2) in einem der Behälter (11) durch Einwirken auf die bereits in dem Behälter (11) angeordneten Teile (2) und/oder durch Steuern des Einfüllens der Teile (2) in den Behälter (11), insbesondere durch Steuern der Einfüllposition.

4. Vorrichtung (3, 3.1 bis 3.5) nach einem der vorstehenden Ansprüche, **gekennzeichnet durch** eine Behälterzuführeinrichtung (35.1, 35.2, 35.3) zum automatisierten Zuführen des mindestens einen Behälters (11) in die Vorrichtung (3, 3.1 bis 3.5) und/oder eine Behälterabgabeeinrichtung (35.1, 35.2, 35.3) zum automatisierten Abgeben des mindestens einen Behälters (11) aus der Vorrichtung (3, 3.1 bis 3.5).

5. Vorrichtung (3, 3.1 bis 3.5) nach einem der vorstehenden Ansprüche, **dadurch gekennzeichnet, dass** die Behälterzuführeinrichtung (35.1, 35.2, 35.3) und/oder die Behälterabgabeeinrichtung (35.1, 35.2, 35.3) einen Antrieb (36.1, 36.2, 36.3) zum Verlagern der Behälter (11) und/oder einen Kippmechanismus zum Schwenken der Behälter (11) und/oder ein verlagerbares Verschlussmittel zum reversiblen Öffnen eines Gehäuses (12) der Vorrichtung (3, 3.1 bis 3.5) und/oder einen Schubladenmechanismus aufweisen.

6. Vorrichtung (3, 3.1 bis 3.5) nach einem der vorstehenden Ansprüche, **dadurch gekennzeichnet, dass** der jeweilige Behälterträger (17) ein Ausrichtmittel (25) zum Festlegen einer Orientierung des Behälterträgers (17) aufweist, wobei das Ausrichtmittel (25) zwei Eingriffsabschnitte (25.1) aufweist, die jeweils unabhängig voneinander zum Festlegen der Orientierung des Behälterträgers (17) ausgebildet sind.

7. Vorrichtung (3, 3.1 bis 3.5) nach einem der vorstehenden Ansprüche, **gekennzeichnet, durch** eine Füllstandsüberwachung zum Erfassen des Füllstands mit den Teilen mindestens eines der Behälter (11).

8. Vorrichtung (3, 3.1 bis 3.5) nach einem der vorstehenden Ansprüche, **gekennzeichnet durch** mindestens einen Mitnehmer (28) an dem jeweiligen Transportmittel (27.1, 27.2) zum reversiblen Koppeln mit jeweils einem der Behälterträger (17).

9. Vorrichtung (3, 3.1 bis 3.5) nach einem der vorstehenden Ansprüche, **gekennzeichnet durch** mindestens einen Transportabschnitt zum Ausbilden eines offenen Endes der Transportstrecke (18), an welchem die Behälterzuführeinrichtung (35.1, 35.2, 35.3) und/oder die Behälterabgabeeinrichtung (35.1, 35.2, 35.3) und/oder die Teilezuführeinrichtung (8) und/oder die Teileabgabeeinrichtung (38) angeordnet sind.

10. Vorrichtung (3, 3.1 bis 3.5) nach einem der vorstehenden Ansprüche, **dadurch gekennzeichnet, dass** die Transportstrecke (18) zumindest eine umlaufend geschlossene Teilstrecke (19.1, 19.2, 19.3, 19.4; 19.1, 19.2, 19.4, 19.5; 19.2, 19.3, 19.4, 19.5) zum Fördern der Teile (2) in einem Förderkreis, insbesondere mit rechteckförmigem Behälterumlauf, aufweist.

11. Vorrichtung (3, 3.1 bis 3.5) nach einem der vorstehenden Ansprüche, **dadurch gekennzeichnet, dass** die Transportstrecke (18) mindestens zwei vertikale Transportabschnitte (19.1, 19.3, 19.5) und mindestens zwei horizontale Transportabschnitte (19.2, 19.4) aufweist.

12. Vorrichtung (3, 3.1 bis 3.5) nach einem der vorstehenden Ansprüche, **dadurch gekennzeichnet, dass** die Transportstrecke (18) mindestens eine Transportstreckenkreuzung (31.1, 31.2) aufweist, an der mindestens drei der Transportabschnitte (19.2, 19.3, 19.4) aneinander angrenzen.

13. Vorrichtung (3, 3.1 bis 3.5) nach einem der vorstehenden Ansprüche, **gekennzeichnet durch** eine integrierte Fahreinheit (50) zum automatisierten Verlagern der Vorrichtung (3, 3.1 bis 3.5) relativ zum Boden und/oder eine Fahrwagenkopplung (49) zum reversiblen Koppeln mit einem Fahrwagen (48) zum Verlagern der Vorrichtung (3,) relativ zum Boden.

14. System (1, 1.1 bis 1.4) aufweisend
14.1 eine Vorrichtung (3, 3.1 bis 3.5) nach einem der vorstehenden Ansprüche,
14.2 eine Maschine (4, 4.1 bis 4.5) zum Herstellen der Teile (2), insbesondere eine Spritzgussmaschine, und
14.3 eine fördertechnische Verbindung (47) zwischen der Vorrichtung (3, 3.1 bis 3.5) und der Maschine (4, 4.1 bis 4.5) zum vollständig automatisierten Verlagern der Teile (2) zwischen der Vorrichtung (3, 3.1 bis 3.5) und der Maschine (4, 4.1 bis 4.5).

15. System (1, 1.1 bis 1.4) nach Anspruch 14, **gekennzeichnet durch** mindestens zwei der Maschinen (4, 4.1 bis 4.5) zum Herstellen unterschiedlicher Teile (2), die entlang einer Materialflusskette stromaufwärts oder stromabwärts der Vorrichtung (3, 3.1 bis 3.5) angeordnet sind und jeweils mittels der fördertechnischen Verbindung (47) an die Vorrichtung (3, 3.1 bis 3.5) angeschlossen sind.
